# EUROPEAN PATENT APPLICATION

(11) **EP 4 653 970 A1**
(43) Date of publication of application: **26.11.2025**
(21) Application number: 25174778.8
(22) Date of filing: 07.05.2025
(51) Int. Cl.: G05B 23/02, G06Q 10/20

(54) **INDUSTRIAL CONTROL SYSTEMS AND METHODS BASED ON PART AVAILABILITY**

(30) Priority: 21.05.2024 US 202418670166
(71) Applicant: Rockwell Automation Technologies, Inc., Mayfield Heights, OH 44124 (US)
(72) Inventor: Anthony, Michael J., Mayfield Heights, OH, 44124 (US); Entzminger, Rob A., Mayfield Heights, OH, 44124 (US); Marques, Roberto S., Mayfield Heights, OH, 44124 (US); Mazur, David C., Mayfield Heights, OH, 44124 (US); Sandler, Nathaniel S., Mayfield Heights, OH, 44124 (US); Sneen, Kurt D., Mayfield Heights, OH, 44124 (US); Spaner, Michael A., Mayfield Heights, OH, 44124 (US); Mills, Jonathan A., Mayfield Heights, OH, 44124 (US)
(74) Representative: Grünecker Patent- und Rechtsanwälte PartG mbB

(57) **Abstract**

Described systems and methods may enable a cloud-computing system to use data model-based analysis to manage maintenance of an industrial automation system based on life stage predictions and real-time evaluations. Based on the data model-based analyses, the cloud-computing system may instruct an industrial control system of the industrial automation system to implement recommended adjustments and/or to confirm a part replacement occurred in situ. The recommended adjustment may include a part replacement. The cloud-computing system may generate instructions to cause shipment of the part to be installed as part of the part replacement to the industrial automation system.

## Description

### BACKGROUND

The present disclosure generally relates to process control for industrial automation devices.

Industrial automation systems may be used to provide automated control of one or more industrial automation devices (e.g., including one or more actuators) in an industrial setting. Implementing process control for the one or more industrial automation devices using dedicated operational technology (OT) hardware, such as one or more industrial automation controllers, may be inflexible and inefficient to scale quickly. An operator's capability to run process control on dedicated hardware is largely limited to the capabilities of the OT hardware it has at its disposal and a configuration of that OT hardware. Adding capability to run more process control may require acquiring more OT hardware. Moreover, knowing when to repair or replacement and/or the replacement or repairing itself of OT hardware may be onerous to track, which may result in losing track of what changes were made to which OT hardware and when. Systems and methods to improve change management operations within an industrial automation system may be desired. Furthermore, systems and methods that automate operations to occur after a change occurs may be desired to improve management of the relatively large number of parts within an industrial automation system.

This section is intended to introduce the reader to aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, a system may include a first computing system that may receive an identity indication from an edge device able to communicatively couple to an industrial automation system, where the identity indication is associated with an industrial automation device, where the identity indication includes a catalog number of the industrial automation device, a revision indication of the industrial automation device, a serial number of the industrial automation device, a product name of the industrial automation device, or any combination thereof. The first computing system may identify a part of the industrial automation device based on selecting a part list from indications of part lists stored on a storage device based on the identity indication, where the part list is associated in the storage device with at least one of the catalog number of the industrial automation device, the revision indication of the industrial automation device, the serial number of the industrial automation device, the product name of the industrial automation device, or any combination thereof. The first computing system may receive an indication of sensed data acquired at a first time in association with the part of the industrial automation device. The first computing system may receive a device model corresponding to the part, where the device model includes indications of sensed data expected to be received while the part is operated at each life stage of life stages. The first computing system may identify a life stage of the part from the life stages based on comparing the sensed data to the indications of sensed data. The first computing system may determine to replace the part based on comparing the life stage to a threshold life stage. The first computing system may transmit an indication of a recommendation to replace the part and the life stage to a second computing system on-premise relative to the industrial automation system.

In another embodiment, a system may include a computing system. The computing system may receive an identity indication from an edge device communicatively coupled to an industrial automation system. The identity indication may be associated with an industrial automation device. The identity indication may include a catalog number of the industrial automation device, a revision indication of the industrial automation device, a serial number of the industrial automation device, or a product name of the industrial automation device, or any combination thereof. The computing system may receive an indication of sensed data acquired at a first time in association with parts of the industrial automation device. The computing system may identify a part of the parts based on indications of part lists stored on a storage device, the identity indication, and the sensed data. The computing system may receive a device model corresponding to the part. The device model may include indications of sensed data expected to be received while the part is operated at each life stage of life stages. The computing system may identify a life stage of the part from the life stages based on comparing the sensed data to the indications of sensed data. The computing system may generate a recommendation to replace the part based on the life stage.

In a further embodiment, a tangible, non-transitory, computer-readable medium may store instructions that, when executed by processing circuitry, cause the processing circuitry to perform operations. The operations may include receiving an identity indication from an edge device able to communicatively couple to an industrial automation system. The identity indication may be associated with an industrial automation device. The identity indication may include a catalog number of the industrial automation device, a revision indication of the industrial automation device, a serial number of the industrial automation device, or a product name of the industrial automation device, or any combination thereof. The operations may include receiving an indication of sensed data acquired at a first time in association with parts of the industrial automation device. The operations may include identifying a part of the parts based on indications of part lists, the identity indication, and the sensed data. The operations may include receiving a device model corresponding to the part. The device model may include indications of sensed data expected to be received while the part is operated at each life stage of life stages. The operations may include identifying a life stage of the part from the life stages based on comparing the sensed data to the indications of sensed data. The operations may include generating an indication of a recommended operation to perform relative to the part based on the life stage.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 is a schematic view of an industrial automation system, in accordance with embodiments presented herein;
FIG. 2 is a block diagram of example components that could be used in the industrial automation system of FIG. 1, in accordance with embodiments presented herein;
FIG. 3 is a perspective view of an example of the industrial automation system of FIG. 1 controlled by an industrial control system, in accordance with an embodiment;
FIG. 4 is a diagrammatic representation of an example operational technology (OT) hardware of the industrial automation system of FIG. 3, a motor drive, and an indication of a parts list corresponding to the motor drive, in accordance with an embodiment;
FIG. 5 is a flow chart of a process for implementing the adjustment to an operation of an asset based on an indication of the asset, in accordance with an embodiment;
FIG. 6 is a flow chart of a process for generating a recommendation to replace a part based on an indication of asset information, in accordance with an embodiment;
FIG. 7 is a flow chart of a process for implementing a replacement part delivery based on an indication of a part to be replaced and a site location of the replacement, in accordance with an embodiment;
FIG. 8 is a flow chart of a process for implementing an operational adjustment of an asset based on a selection of a replacement part of the asset, in accordance with an embodiment;
FIG. 9 is a flow chart of a process for validating that a replacement occurred based on sensed data associated with an asset (e.g., OT device), in accordance with an embodiment;
FIG. 10 is a flow chart of a process for implementing a replacement part delivery based on an indication of an asset and an indication of acquired data associated with the asset, in accordance with an embodiment;
FIG. 11 is a flow chart of a process for implementing a replacement part delivery based on an indication of a maintenance schedule, in accordance with an embodiment;
FIG. 12 is a flow chart of a process for implementing a production adjustment based on an indication of the production adjustment, in accordance with an embodiment;
FIG. 13 is a diagrammatic representation of four example graphical user interfaces to convey image data generated based on one or more results from one or more processes of FIGS. 5-13, in accordance with an embodiment; and
FIG. 14 is a diagrammatic representation of an example of vitals data processing, which may be used to generate health indications corresponding to a life stage of an asset (e.g., OT device), in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Running process control for one or more industrial automation devices on dedicated OT hardware, such as a controller, is inflexible and hard to scale quickly. An operator's capability to run process control on dedicated hardware is largely limited to the capabilities of the OT hardware it has at its disposal and a configuration of that OT hardware. Adding capability to run more process control may require acquiring more OT hardware. Moreover, repairing and/or adding OT hardware may be onerous to track, which may result in losing track of what changes were made to which OT hardware and when. Accordingly, providing industrial control systems able to perform automated repair and change tracking based on acquired sensing data may improve industrial automation system operations by increasing a likelihood that accurate repair and change tracking is performed and/or eliminating a possibility of error in tracking.

To elaborate, assets of an industrial automation system, such as OT hardware, include many parts. For example, a fan of a motor may be a part itself, which includes dozens of smaller parts that represent possible repair points for future maintenance activities. It may be desired to track life stages (e.g., indications of health, scores corresponding to healthiness of the part and/or asset) of various parts of the asset (e.g., motor) to help obtain a comprehensive view on asset health.

To do so, a cloud-computing system may model a range of healthy and unhealthy behaviors of the parts. The cloud-computing system may compare real-time performance of a part to modelled behaviors of the part to help identify a life stage of that part relative to the modelled behaviors. Once a life stage is identified, a variety of improvements to industrial automation system operations may be implemented, which may help increase up-time to drive increases in production while reducing non-productive resource consumption or environmental damages from unplanned maintenance outages.

For example, the cloud-computing system may determine what parts are expected in an asset based on other experiences with that type of asset. Based on those parts, the cloud-computing system may identify life stages of those parts and determine whether to recommend replacing any of those parts based on the modelled behaviors of the parts and sensed data indicating the real-time performance of those parts.

Once the cloud-computing system identifies a part replacement, the cloud-computing system may coordinate identifying where compatible replacement parts are physically located (e.g., in a warehouse associated with an industrial automation system, in another warehouse of an enterprise associated with the industrial automation system, in a manufacturer warehouse) and coordinate the automatic procurement and shipping to deliver any off-site components to be used to perform the replacement to the warehouse associated with the industrial automation system. The cloud-computing system may generate one or more work orders to facilitate procurement of the replacement parts, to instruct an operator to perform the part replacement, and the like. The cloud-computing system may determine an estimated shipping time for a replacement part physically located outside the warehouse associated with the industrial automation system. In response to determining the estimated shipping time, the cloud-computing system may generate and send instructions to an industrial control system to adjust operation of the asset having its part replaced to extend the life of the part for at least a duration of time equaling the estimated shipping time (e.g., "increased lifespan mode").

After a repair occurs, the cloud-computing system may use the model of the part and/or the asset to determine that the repair occurred. Changes in sensed data acquired for that part and/or asset may indicated a change in performance. The cloud-computing system may validate that the part replacement occurred based on additional sensed data (e.g., of a different type) and/or based on operator input (e.g., presenting an alert on a human-machine interface (HMI) to confirm that the part replacement was performed). The cloud-computing system may reset the life stage of the part that was replaced.

Using similar operations, the cloud-computing system may generate maintenance scheduling for a shutdown. Given a prompt with how long a shutdown is expected, the cloud-computing system may identify part replacements, part repairs, asset replacements, and/or asset repairs to be performed during the length of the shutdown. The cloud-computing system may do so based on prioritizing maintenance recommendations based on criticality of the recommendation and a time of completion. To do so, the cloud-computing system may perform a cost-benefit analysis based on cost to repair a part, cost to replace the associated asset, cost to replace the part, a time to repair, a time to replace, and relative changes to life stages based on the repair or replacement. These operations may be performed in response to an indication of a shutdown time window (e.g., time duration during which one or more portions of the industrial automation system are isolated from a process and available for maintenance activities) and thus, the determinations of part/asset replacements or repairs may be made based on estimated time to complete and criticality indications as a way to prioritize the more desired (e.g., urgent, highest production impact) of repairs to fit into the shutdown time window.

After generating the maintenance recommendations, the cloud-computing system may implement the maintenance schedule it generates by generating one or more work orders to schedule the recommended maintenance work. The cloud-computing system may perform these operations with the replacement part coordination operations described above to generate instructions to cause the shipment of the various replacement parts from various physical locations to the warehouse of the industrial automation system. This may include operating the associated assets in the increased lifespan mode while awaiting a planned shutdown. In some cases, the maintenance recommendations may be prioritized based on the criticality of the recommendation, an estimated time of completion, and the estimated shipping time for any parts to be used in the maintenance activity. This may help reduce unexpected delays that may otherwise occur when a maintenance activity is scheduled but a part is missing.

In some cases, the cloud-computing system may help optimize production using similar operations. Given an indication with a trend of sales data, the cloud-computing system may autonomously turn the trend in sales data into production adjustments. For example, if the trend in sales data indicates a reduction in sales, then the cloud-computing system may reduce production of the industrial automation system to match a decrease in demand. Conversely, if the trend in sales data indicates an increase in sales, then the cloud-computing system may increase production of the industrial automation system to match the increase in demand. The cloud-computing system may increase or decrease production based on generating instructions to be sent to the industrial control system of the industrial automation system. The industrial control system may adjust operations of one or more assets to implement the desired increase or decrease in production instructed by the cloud-computing system.

When determining metrics for determining life stages, sensed data may be processed via an edge device. The edge device may be disposed between the cloud-computing system and the industrial automation system. These data processing operations may involve extracting vitals data from sensed data. In some systems, data generated by processing the sensed data at the edge may be correlated to the life stages discussed above. For example, the determined amount of time (e.g., that the "signal %" input is identified as being above the "signal threshold %") may be correlated to a life stage.

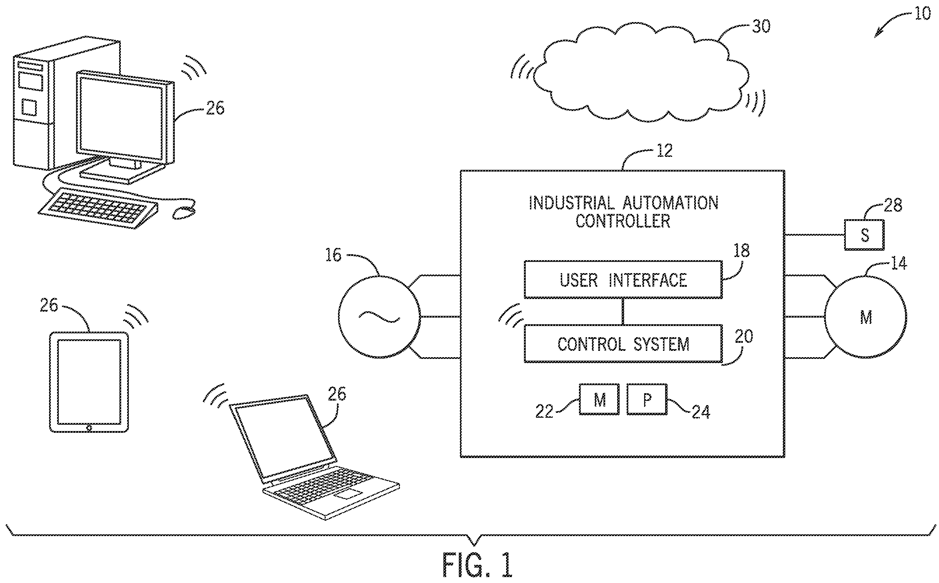

In any of these examples, some of the information processed by the cloud-computing system may be sent for presentation at user equipment via graphical user interfaces (GUIs). The cloud-computing system may generate updates in data presented via the GUIs in response to inputs received via the user equipment. Moreover, in any of these examples, the real-time performance of the part may be indicated through sensed data, which may be received by physical sensors and/or virtual sensors. A virtual sensor may correspond to a model associating changes in a first subset of sensed data to a prediction of a second subset of sensed data. A virtual sensor may be used at a location that is inaccessible for acquiring data, such as inside the asset in a difficult to access portion of the housing. Furthermore, in any of these examples, data may be sent to or received from any of the devices of the industrial automation system and/or industrial control system using symbolic data structures (e.g., symbols and/or templates). Additional details with regard to industrial system management based on inventory availability in accordance with the techniques described above are elaborated on below with reference to FIGS. 1-14.

By way of introduction, FIG. 1 is a schematic view of an example industrial automation system 10 in which the embodiments described herein may be implemented. As shown, the industrial automation system 10 includes operational technology (OT) hardware and information technology (IT) hardware. Examples of OT hardware include a controller 12, an actuator, a motor 14, a power source 16. Examples of the IT hardware include one or more computing devices 26 and a cloud/remote server 30.

To elaborate on the OT hardware, the industrial automation system 10 may also include, or be coupled to, the power source 16. The power source 16 may include a generator, an external power grid, a local power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger industrial automation system 10. In the instant embodiment, the controller 12 includes a user interface 18, such as a human machine interface (HMI), and an industrial control system 20, which may include a memory 22 and a processor 24. The controller 12 may include a cabinet or some other enclosure for housing various components of the industrial automation system 10, such as a motor starter, a disconnect switch, etc.

The industrial control system 20 may be programmed (e.g., via computer readable code or instructions stored on the memory 22, such as a non-transitory computer readable medium, and executable by the processor 24) to provide signals for controlling the motor 14. In certain embodiments, the industrial control system 20 may be programmed according to a specific configuration desired for a particular application. For example, the industrial control system 20 may be programmed to respond to external inputs, such as reference signals, alarms, command/status signals, etc. The external inputs may originate from one or more relays or other electronic devices. The programming of the industrial control system 20 may be accomplished through software or firmware code that may be loaded onto the memory 22 of the industrial control system 20 (e.g., via a locally or remotely located computing device 26) or programmed via the user interface 18 of the controller 12. The industrial control system 20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like.

In some embodiments, the controller 12 may be communicatively coupled to one or more sensors 28 for detecting operating temperatures, voltages, currents, pressures, flow rates, and other measurable variables associated with the industrial automation system 10. With feedback data from the sensors 28, the industrial control system 20 may keep detailed track of the various conditions under which the industrial automation system 10 may be operating. For example, the feedback data may include conditions such as actual motor speed, voltage, frequency, power quality, alarm conditions, etc. In some embodiments, the feedback data may be communicated back to the computing device 26 for additional analysis.

To elaborate further on the IT hardware, the computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The user may use licensed software and/or subscription services to create, analyze, and otherwise develop the project. Access to the software and/or subscription services may be based on user identification authentication to confirm subscriber information. The computing device 26 may send a project to the controller 12 for execution. Execution of the industrial automation project causes the controller 12 to control components (e.g., motor 14) within the industrial automation system 10 through performance of one or more tasks and/or processes. In some applications, the controller 12 may be communicatively positioned in a private network and/or behind a firewall, such that the controller 12 does not have communication access outside a local network and is not in communication with any devices outside the firewall, other than the computing device 26. The controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

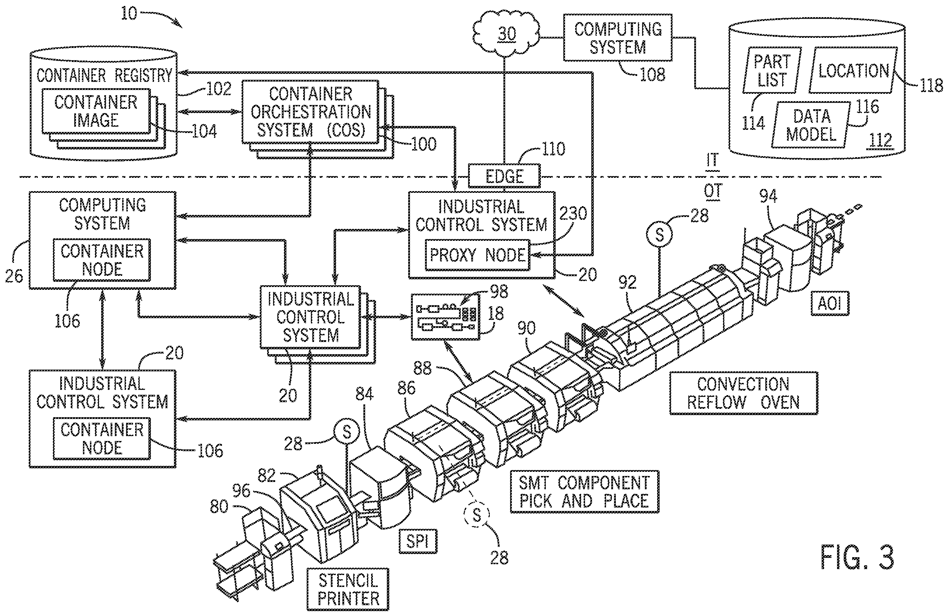

The computing device 26 may be communicatively coupled to a cloud/remote server 30 via the internet, or some other network. In one embodiment, the cloud/remote server 30 may be operated by the manufacturer of the controller 12, a software provider, a seller of the controller 12, a service provider, operator of the controller 12, owner of the controller 12, etc. The cloud/remote server 30 may be used to help customers create and/or modify projects, to help troubleshoot any problems that may arise with the controller 12, develop policies, or to provide other services (e.g., project analysis, enabling, restricting capabilities of the controller 12, data analysis, controller firmware updates, etc.). The cloud/remote server 30 may be one or more servers operated by the manufacturer, software provider, seller, service provider, operator, or owner of the controller 12. The cloud/remote server 30 may be disposed at a facility owned and/or operated by the manufacturer, software provider, seller, service provider, operator, or owner of the controller 12. In other embodiments, the cloud/remote server 30 may be disposed in a datacenter in which the manufacturer, software provider, seller, service provider, operator, or owner of the controller 12 owns or rents server space. In further embodiments, the cloud/remote server 30 may include multiple servers operating in one or more data center to provide a cloud computing environment. Thus, in some cases, the cloud/remote server 30 is disposed external to the industrial automation system 10 and communicatively couples to the IT hardware and/or OT hardware through one or more edge devices (e.g., edge device 110 of FIG. 3). Multiple cloud/remote servers 30 may be associated with the industrial automation system 10 operations, where some of the cloud/remote servers 30 may be coupled to one or more IT hardware and/or one or more OT hardware without the intermediary edge device (e.g., edge device 110) and where the remaining of the cloud/remote servers 30 may be coupled to one or more IT hardware and/or one or more OT hardware through the intermediary edge device (e.g., edge device 110). It may be desired to use the edge device to perform communication conversion operations, information security (e.g., encryption, network security) operations, or the like, to protect the operation of the industrial automation system 10 from unconsented or verified access.

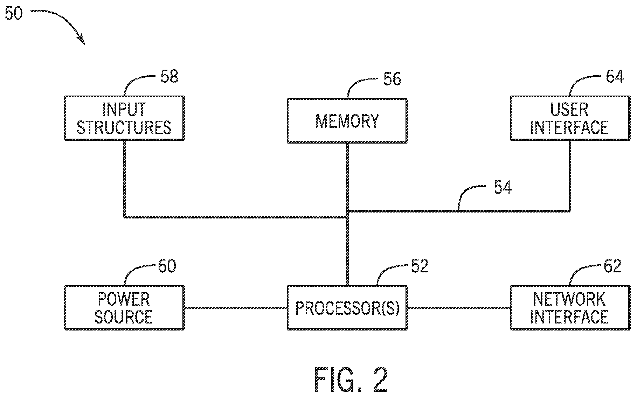

FIG. 2 illustrates a block diagram of example components of a computing device 50 that could be used as the computing device 26, the cloud/remote server 30, the controller 12, the industrial control system 20, or some other device within the system 10 shown in FIG. 1. As used herein, a computing device 50 may be implemented as one or more computing systems including laptop, notebook, desktop, tablet, HMI, or workstation computers, as well as server type devices or portable, communication type devices, such as cellular telephones and/or other suitable computing devices.

As illustrated, the computing device 50 may include various hardware components, such as one or more processors 52, one or more busses 54, memory 56, input structures 58, a power source 60, a network interface 62, a user interface 64, and/or other computer components useful in performing the functions described herein.

The one or more processors 52 may include, in certain implementations, microprocessors able to execute instructions stored in the memory 56 or other accessible locations. Alternatively, the one or more processors 52 may be implemented as application-specific integrated circuits (ASICs), field-programmable gate arrays (FPGAs), and/or other devices designed to perform functions discussed herein in a dedicated manner. As will be appreciated, multiple processors 52 or processing components may be used to perform functions discussed herein in a distributed or parallel manner.

The memory 56 may encompass any tangible, non-transitory medium for storing data or executable routines. Although shown for convenience as a single block in FIG. 2, the memory 56 may encompass various discrete media in the same or different physical locations. The one or more processors 52 may access data in the memory 56 via one or more busses 54.

The input structures 58 may allow a user to input data and/or commands to the device 50 and may include mice, touchpads, touchscreens, keyboards, controllers, and so forth. The power source 60 can be any suitable source for providing power to the various components of the computing device 50, including line and battery power. In the depicted example, the computing device 50 includes a network interface 62. Such a network interface 62 may allow communication with other devices on a network using one or more communication protocols. In the depicted example, the device 50 includes a user interface 64, such as a display that may display images or data provided by the one or more processors 52. The user interface 64 may include, for example, a monitor, a display, and so forth. As will be appreciated, in a real-world context a processor-based system, such as the computing device 50 of FIG. 2, may be employed to implement some or all of the present approach, such as performing the functions of the controller, the computing device 26, and/or the cloud/remote server 30 shown in FIG. 1, as well as other memory-containing devices.

FIG. 3 is a perspective view of an example of the industrial automation system 10 of FIG. 1. The industrial automation system 10 includes stations 80, 82, 84, 86, 88, 90, 92, 94 having machine components and/or machines to conduct functions within an automated process, such as printed circuit board assembly, as is depicted. The automated process may begin at a station 80 used for loading objects, such as substrates, into the industrial automation system 10 via a conveyor section 96. For example, objects may be transported along the conveyor section 96 to station 82 to perform a first action, such a printing solder paste to the substrate via stenciling. As objects exit from the station 82, the objects may be transported via the conveyor section 96 to a station 84 for solder paste inspection (SPI) to inspect printer results, to a station 86, 88, and 90 for surface mount technology (SMT) component placement, to a station 92 for convection reflow oven to melt the solder to make electrical couplings, and finally to a station 94 for automated optical inspection (AOI) to inspect the object manufactured (e.g., the manufactured printed circuit board). After the objects proceed through the various stations, the objects may be removed from the station 94, for example, for storage in a warehouse or for shipment. It should be understood, however, that, for other applications, the particular system, machine components, machines, stations, and/or conveyors may be different or specially adapted to the application.

For example, the industrial automation system 10 may include machinery to perform various operations in a compressor station, an oil refinery, a batch operation for making food items, chemical processing operations, brewery operations, mining operations, a mechanized assembly line, and so forth. Accordingly, the industrial automation system 10 may include a variety of operational components, such as electric motors, valves, actuators, temperature elements, pressure sensors, or a myriad of machinery or devices used for manufacturing, processing, material handling, and other applications. The industrial automation system 10 may also include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation system 10 may also include motors, protection devices, switchgear, compressors, and the like. Each of these described operational components may correspond to and/or generate a variety of OT data regarding operation, status, sensor data, operational modes, alarm conditions, or the like, that may be desirable to output for analysis with IT data from an IT network, for storage in an IT network, for analysis with expected operation set points (e.g., thresholds), or the like.

In certain embodiments, one or more properties of the industrial automation system 10 equipment, such as the stations 80, 82, 84, 86, 88, 90, 92, 94, may be monitored and controlled by the industrial control systems 20 for regulating control variables. For example, sensing devices (e.g., sensors 28) may monitor various properties of the industrial automation system 10 and may be used by the industrial control systems 20 at least in part in adjusting operations of the industrial automation system 10 (e.g., as part of a control loop). In some cases, the industrial automation system 10 may be associated with devices used by other equipment. For instance, scanners, gauges, valves, flow meters, and the like may be disposed on or within the industrial automation system 10. Here, the industrial control systems 20 may receive data from the associated devices and use the data to perform their respective operations more efficiently. For example, a controller of the industrial automation system 10 associated with a motor drive may receive data regarding a temperature of a connected motor and may adjust operations of the motor drive based on the data.

The industrial control systems 20 may include or be communicatively coupled to the user interface 18 (e.g., a display able to render a human-machine interface (HMI)) and to devices of the industrial automation system 10. It should be understood that any suitable number of industrial control systems 20 may be used in a particular industrial automation system 10 embodiment. The industrial control systems 20 may facilitate representing components of the industrial automation system 10 through programming objects that may be instantiated and executed to provide simulated functionality similar or identical to the actual components, as well as visualization of the components, or both, on the user interface 18. The programming objects may include code and/or instructions stored in the industrial control systems 20 and executed by processing circuitry of the industrial control systems 20. The processing circuitry may communicate with memory circuitry to permit the storage of the component visualizations.

As illustrated, a user interface 18 may depict representations of the components of the industrial automation system 10. The industrial control system 20 may use data transmitted by the sensors 28 to update visualizations of the components via changing one or more statuses, states, and/or indications of current operations of the components. These sensors 28 may be any suitable device adapted to provide information regarding process conditions. Indeed, the sensors 28 may be used in a process loop (e.g., control loop) that may be monitored and controlled by the industrial control system 20. As such, a process loop may be activated based on process inputs (e.g., an input from the sensor 28) or direct input from a person via the user interface 18. The person operating and/or monitoring the industrial automation system 10 may reference the user interface 18 to determine various statuses, states, and/or current operations of the industrial automation system 10 and/or for a particular component. Furthermore, the person operating and/or monitoring the industrial automation system 10 may adjust to various components to start, stop, power-down, power-on, or otherwise adjust an operation of one or more components of the industrial automation system 10 through interactions with control panels or various input devices.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, sensors 28 may gather OT data indicative of one or more operations of the industrial automation system 10 or the industrial control system 20. In this way, the OT data may be analog data or digital data indicative of measurements, statuses, alarms, or the like associated with operation of the industrial automation system 10 or the industrial control system 20.

The controller 12 may correspond to an industrial automation device able to control an asset, such as the motor 14, based on commands received from the control system 20. The controller 12 may operate in an OT space in which OT data is used to monitor and control OT assets, such as the equipment illustrated in the stations 80, 82, 84, 86, 88, 90, 92, 94 of the industrial automation system 10 or other industrial equipment. The OT space, environment, or network generally includes direct monitoring and control operations that are coordinated by the industrial control system 20 and a corresponding OT asset. For example, a programmable logic controller (PLC) may operate in the OT network to control operations of an OT asset (e.g., drive, motor, and/or high-level controllers). The industrial control systems 20 may be specifically programmed to communicate directly with the respective OT assets.

A container orchestration system 100, on the other hand, may operate in an information technology (IT) environment. That is, the container orchestration system 100 may include a cluster of multiple computing devices that coordinates an automatic process of managing or scheduling work of individual containers for applications within the computing devices of the cluster. In other words, the container orchestration system 100 may be used to automate various tasks at scale across multiple computing devices. By way of example, the container orchestration system 100 may automate tasks such as programming and scheduling deployment of containers, provisioning and deploying containers, determining availability of containers, programming applications in terms of the containers that they run in, scaling of containers to equally balance application workloads across an infrastructure, allocating resources between containers, performing load balancing, traffic routing, and service discovery of containers, performing health monitoring of containers, securing the interactions between containers, and the like. In any case, the container orchestration system 100 may use configuration files to determine a network protocol to facilitate communication between containers, a storage location to save logs, and the like. The container orchestration system 100 may also schedule deployment of containers into clusters and identify a host (e.g., node) that may be best suited for executing the container. After the host is identified, the container orchestration system 100 may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the run time dependencies with the container, the container may perform in the same manner regardless of the host in which it is operating. In some embodiments, containers may be stored in a container registry 102 as container images 104. The container registry 102 may be any suitable data storage or database that may be accessible to the container orchestration system 100. The container image 104 may correspond to an executable software package that includes the tools and data employed to execute a respective application. That is, the container image 104 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 100. The deployment configuration file may be stored in the container registry 102 along with the respective container images 104 associated with the deployment configuration file. The deployment configuration file may include a list of different pods and a number of replicas for each pod that should be operating within the container orchestration system 100 at any given time. Each pod may correspond to a logical unit of an application, which may be associated with one or more containers. The container orchestration system 100 may coordinate the distribution and execution of the pods listed in the deployment configuration file, such that the desired state is continuously met. In some embodiments, the container orchestration system 100 may include a master node that retrieves the deployment configuration files from the container registry 102, schedules the deployment of pods to the connected nodes, and ensures that the desired state specified in the deployment configuration file is met. For instance, if a pod stops operating on one node, the master node may receive a notification from the respective worker node that is no longer executing the pod and depl1oy the pod to another worker node to ensure that the desired state is present across the cluster of nodes.

As mentioned above, the container orchestration system 100 may include a cluster of computing devices, computing systems, or container nodes that may work together to achieve certain specifications or states, as designated in the respective container. In some embodiments, container nodes 106 may be integrated within industrial control systems 20 as shown in FIG. 3. That is, container nodes 106 may be implemented by the industrial control systems 20, such that they appear as worker nodes to the master node in the container orchestration system 100. In this way, the master node of the container orchestration system 100 may send commands to the container nodes 106 that are also programmed to perform applications and operations for the respective industrial equipment.

With this in mind, the container nodes 106 may be integrated with the industrial control systems 20, such that they serve as passive-indirect participants, passive-direct participants, or active participants of the container orchestration system 100. As passive-indirect participants, the container nodes 106 may respond to a subset of all of the commands that may be issued by the container orchestration system 100. In this way, the container nodes 106 may support limited container lifecycle features, such as receiving pods, executing the pods, updating a respective filesystem to included software packages for execution by the industrial control system 20, and reporting the status of the pods to the master node of the container orchestration system 100. The limited features implementable by the container nodes 106 that operate in the passive-indirect mode may be limited to commands that the respective industrial control system 20 may implement using native commands that map directly to the commands received by the master node of the container orchestration system 100. Moreover, the container node 106 operating in the passive-indirect mode of operation may not be capable to push the packages or directly control the operation of the industrial control system 20 to execute the package. Instead, the industrial control system 20 may periodically check the file system of the container node 106 and retrieve the new package at that time for execution.

As passive-direct participants, the container nodes 106 may operate as a node that is part of the cluster of nodes for the container orchestration system 100. As such, the container node 106 may support the full container lifecycle features. That is, container node 106 operating in the passive-direct mode may unpack a container image and push the resultant package to the industrial control system 20, such that the industrial control system 20 executes the package in response to receiving it from the container node 106. As such, the container orchestration system 100 may have access to a worker node that may directly implement commands received from the master node onto the industrial control system 20.

In the active participant mode, the container node 106 may include a computing module or system that hosts an operating system (e.g., Linux) that may continuously operate a container host daemon that may participate in the management of container operations. As such, the active participant container node 106 may perform any operations that the master node of the container orchestration system 100 may perform. By including a container node 106 operating in the OT space, the container orchestration system 100 is capable of extending its management operations into the OT space (e.g., the container node 106 may provision devices in the OT space).

A proxy node 120, which may be an instance of the container node 106 or a different container node 106, may provide bi-directional coordination between the IT space and the OT space, and the like. For instance, the container node 106 operating as the proxy node 120 may intercept orchestration commands and cause industrial control system 20 to implement appropriate machine control routines based on the commands. The industrial control system 20 may confirm the machine state to the proxy node 120, which may then reply to the master node of the container orchestration system 100 on behalf of the industrial control system 20.

Additionally, the industrial control system 20 may share an industrial automation device tree via the proxy node 120. As such, the proxy node 120 may provide the master node with state data, address data, descriptive metadata, versioning data, certificate data, key information, and other relevant parameters concerning the industrial control system 20. Moreover, the proxy node 120 may issue requests targeted to other industrial control systems 20 to control other industrial automation devices. For instance, the proxy node 120 may translate and forward commands to a target industrial automation device using one or more OT communication protocols, may translate and receive replies from the industrial automation devices, and the like. As such, the proxy node 120 may perform health checks, provide configuration updates, send firmware patches, execute key refreshes, and other OT operations for other industrial automation devices.

One example container deployable by the container orchestration system 100 and/or the cloud-computing system 108 is container that, when deployed, operates as a virtual sensor 28. Some OT hardware may have a part that is inaccessible and/or installed in a hard-to-sense location, that may be desired to have a characteristic monitored during operation. For example, a winding of a motor may have a temperature during operation that may be monitored over time to provide an indication of insulation degradation over the time. During manufacturing of that OT hardware, sensed data may be acquired of the part and sensed data may be acquired of the OT hardware owning the part, where both types of sensed data may be acquired over time to show how changes in time and/or life change both types of sensed data. For example, the temperature of the winding may positively correlate to an ambient temperature based on a constant generated during manufacturing. This relationship (e.g., an indication of the correlation and the constant) may be stored in a data model 116 and/or in storage accessible to the container orchestration system 100. The data model 116 may be associated with a virtual sensor 28 "installed" in the winding of the motor-where data generated by the virtual sensor 28 may be associated with the winding of the motor 14 in memory accessible by the industrial control system 20, the computing device 26, the cloud-computing system 108, or the like. During operation of the industrial automation system 10, the industrial control system 20, the computing device 26, the cloud-computing system 108, or the like, may generate sensed data for the part using the virtual sensor 28 based on the sensed data received from the OT hardware owning the inaccessible part. For example, the ambient temperature of the motor may be used during operation to determine what a winding temperature of the motor is despite the winding being in accessible to traditional sensors. The determined winding temperature is reported and associated with the motor using same reporting and association methods as sensed data received from physical sensors. For example, acquired data from a virtual sensor 28 may be used to update a graphical user interface (GUI) with acquired data from a physical sensor. This integration may enable low complexity integration of virtual sensors 28 into the industrial automation system 10 since data consumption and/or data transmission operations may not be changed to accommodate the virtual sensors 28.

As noted above, the industrial automation system 10 may communicatively couple to the cloud-computing system 108 via the cloud/remote server 30, where one or both may be disposed off-premise relative to the industrial automation system 10. In some cases, this communicative coupling routes through an edge device 110, which may be disposed on-premise of the industrial automation system 10. The edge device 110 may convert data between the OT network and the cloud/remote server 30, enabling intercommunication between the cloud-computing system 108 and the industrial control system 20. In some cases, the cloud-computing system 108 may communicatively couple to one or more computing devices of the IT network (e.g., computing system of one or more computing devices disposed on-premise) via the cloud/remote server 30 and similar IT-side edge devices to the edge device 110 (not depicted). The incorporation of the edge device 110 and the cloud-computing system 108 may enable improvements to industrial automation system 10 management, such as by offloading some predictive operations from the industrial control system 20 into the cloud-computing system 108, which frees computational resources for local control operations to make room for increasing complexity of the OT network. The cloud-computing system 108 may communicatively couple to storage 112. The storage 112 may store indications of one or more locations 118, indications of one or more data models 116, indications of one or more part lists 114, or the like. In some systems, the storage 112 may store one or more of the indications of locations 118, data models 116, and part lists 114 in association with each other and in association with indications of the related asset. By doing so, the cloud-computing system 108 may read both the part list 114 and the data model 116 to determine a subset of parts of an asset associated with the data model 116, which may help with debugging a particular life stage or recommending a part or asset replacement, among other operations. By cross-referencing indications of the locations 118, the cloud-computing system 108 may determine which replacement part or replacement asset is physically stored closer to a part or asset to be replaced and may generate instructions to deploy to one or more IT assets to instruct the shipment of the replacement part or replacement asset to the industrial automation system 10 in anticipation of a repair condition or life stage as opposed to in reaction to a repair condition or life stage.

To elaborate, the locations 118 may correspond to respective indications of where one or more parts are stored within a distribution or logistics network of an enterprise. For example, where spare parts are stored that could be shipped to and installed within the industrial automation system 10. The locations 118 may correspond to warehousing locations of the enterprise associated with the industrial automation system 10, warehousing locations of the various manufacturers of the assets, or the like. The indication of the locations 118 may correspond to a computer-readable or machine-readable location format or protocol that may enable the cloud-computing system 108 to determine a cost and estimated time of arrival associated with the relocation of the part from a location physically external to the industrial automation system 10 to physically arriving at the industrial automation system 10 for installation.

The data model 116 may include data models associated with model expected or ideal part operation of the asset, as will be appreciated herein. Indeed, data models 116 may include indications of earlier sensed data and indications of a life stage of the asset and/or the part. In other words, the data model 116 may associate indications of life stages for the asset or the part relative to values of the earlier sensed data. The data model 116 may include data models associated with the virtual sensors 28 described above. A data model 116 may correspond to a specific part of a specific asset, more than one part of a specific asset, a specific asset, more than one specific assets (e.g., in a unit of an industrial automation system 10), and so on. The data model 116 may be or indicate a relationship between sensed data received of the part(s) and/or asset(s) and a life stage of the part(s) and/or asset(s). Life stages may be an indication of health, such as a score or identifier corresponding to a relative healthiness of the part and/or asset (i.e., the part or asset corresponding to the data model 116 indicating that life stage). Tracking life stages over time may indicate a comprehensive view on asset health that can be used to predict maintenance and/or production decisions.

The data model 116 may include indications of thresholds or threshold ranges that, when compared to sensed data of a current operation, may identify a life stage of the part(s) and/or asset(s). A threshold may be any suitable value. The cloud-computing system 108 may perform training operations to determine thresholds to be associated to various life stages, where the thresholds corresponding to the life stages may be stored as a data model 116. Any suitable sensing data may be associated with any suitable indication of life stage and/or performance indication based on relationships indicated via the data model. For example, some systems may indicate life stages as a percentage of life expected remaining (e.g., 100%, 90%, 50%...N%), and some systems may indicate life stages as a phrase, such as "high," "medium," and/or "low." Different threshold values or threshold ranges may be used to identify a life stage of "good health," "moderate health," "end-of-life," "at-risk." In some cases, thresholds are used to analyze the sensed data to determine a percentage of life remaining, such as "20%, "40%," "100%," or the like.

Elaborating further on analytical flexibility that may be improved through the cloud-computing system 108 using data models 116, as an example, a motor may include a frame, bearings, a stator, and the like as different parts. Some of these parts may include dozens of smaller parts that represent possible repair points for future maintenance activities. For example, a stator may have winding insulation that degrades overtime and may at some point be desired to be repairs or replaced (e.g., through a motor rebuild). A data model 116 for one or more of the motor parts may be used to track life stages of the various parts as the parts age or degrade at different rates relative to each other, as may occur with normal operation of a motor. As another example, the data model 116 may correspond to a line voltage (e.g., first type of data) of a specific drive (e.g., asset) of the industrial automation system 10 without being particularly associated with a part of that drive, and may thus the data model 116 may associate respective line voltages with respective life stages of the drive as opposed to a respective part of the drive. Another data model 116 may associate respective life stages of a part with line voltages. Thus, the cloud-computing system 108 may process sensed data through multiple data models 116 to identify multiple life stages associated with various parts and assets within an industrial automation system. As yet another example, the data model 116 may identify a relationship between a life stage of a converter (e.g., part) of a drive (e.g., asset) and a combination of sensed data of the converter, such as the surface temperature (e.g., first type of data) of the converter, a secondary side voltage (e.g., second type of data) of the converter, and an input voltage (e.g., third type of data) of the drive. Thus, the cloud-computing system 108 may process multiple types of sensed data corresponding to one or more parts of one or more assets via a data model 116 to identify a life stage associated with a part. Although this example used multiple types of sensed data to identify a life stage associated with a part, it should be understood that multiple types of sensed data to identify a life stage associated with an asset. Moreover, it should be understood that sometimes life stages from one or more data model 116 based analysis may be combined as a data input for another data model 116.

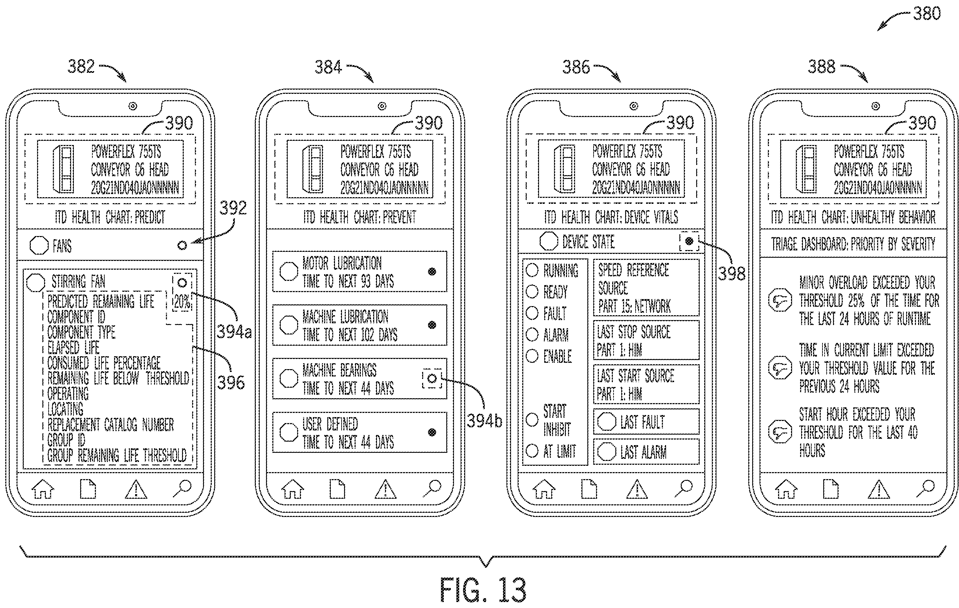

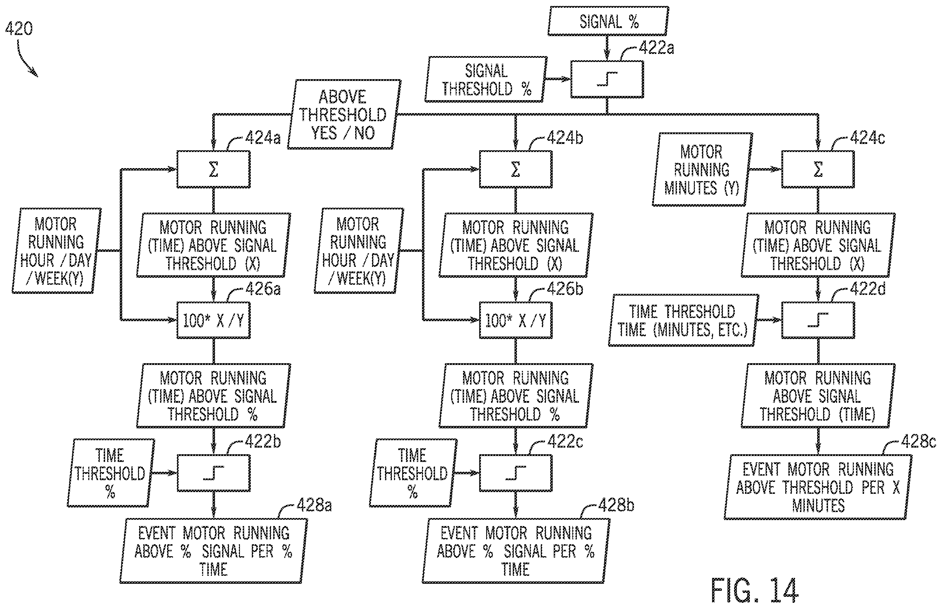

Although threshold-based analysis is described above, other analysis may be indicated to be performed with the data model 116. In this way, the cloud-computing system 108 may access the data model 116 and receive instructions on how to process sensed data according to the data model 116 to generate an indication of a life stage, like a percentage of life remaining indication, as will be appreciated relative to descriptions of FIG. 14. The cloud-computing system 108 may generate GUIs and/or HMIs to present an indication of the life stage, as will be appreciated relative to descriptions of FIG. 13.

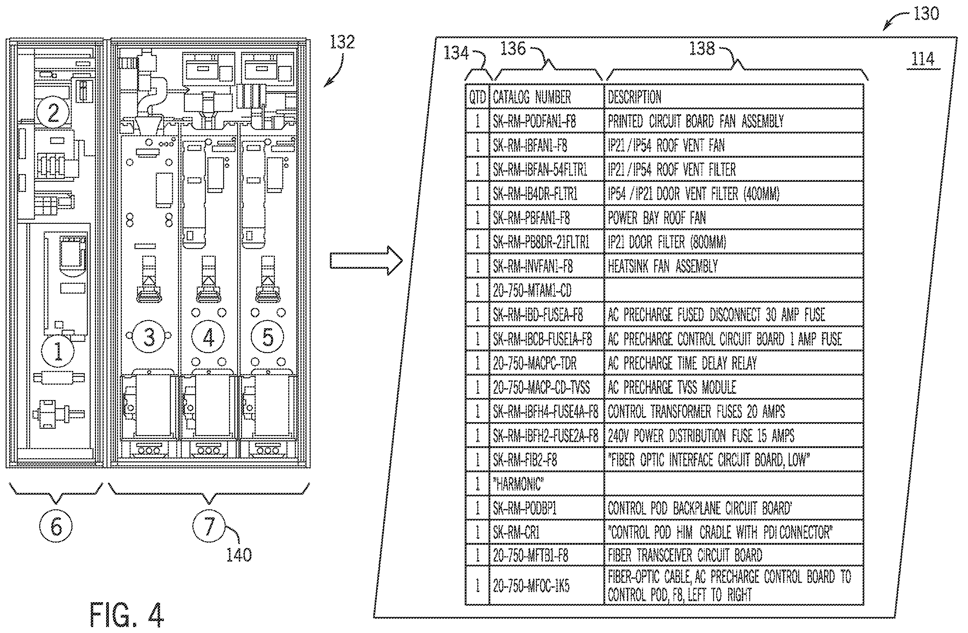

The part lists 114 may correspond to sets of indications of parts included in respective assets, which may correspond to respective OT hardware and/or respective IT hardware. To elaborate on the part lists 114, assets of an industrial automation system include many parts. For example, FIG. 4 illustrates an example part list of 114 a respective asset.

FIG. 4 is a diagrammatic representation of an example operational technology (OT) hardware of the industrial automation system 10, a motor drive, and an indication of a parts list corresponding to the motor drive. The asset illustrated in FIG. 4 is a motor drive 132. The motor drive 132 may include subsystems 1-7 (e.g., numbered via illustrations 140). The subsystem 1 may correspond to a local control system, which may perform motor control system control, and/or communications through I/O connections and feedback channels. The subsystem 2 may correspond to an alternating current (AC) pre-charge module, which may regulate an input AC current from an incoming power source that may help reduce stress on power components during startup. The subsystem 3 may correspond to a filter, which may provide harmonic protection and minimum current distortion into a utility grid based on its included inductors and capacitors. The subsystem 4 may correspond to a line-side converter, which may draw energy from an AC line without harmonic distortion and covert the AC line energy into DC power and, in some cases, may provide regeneration back to the AC line. The subsystem 5 may correspond to a motor-side inverter, which may control a voltage and current of the motor. The subsystem 6 may correspond to an input bay. The subsystem 7 may correspond to a power module.

The motor drive 132 may be associated with a variety of device data and operational data. These various data may be accessible via symbolic data operations. The motor drive 132 may correspond to identity data, state data, runtime data, maintenance data, and sustainability data. The identity data may include indications of information like vendor identification, device type, product code, revision information, serial number, product name, catalog number, and IO connection state. The state data may include health data (e.g., fault, alarm, owned), fault information when in fault (e.g., sequence identifier, display text, code, instance name, time stamp of fault detection), and alarm information when in alarm (e.g., sequence identifier, display text, code, instance name, time stamp of alarm detection). The runtime data may include an indication motor control information (e.g., running, jogging, ready to run, run inhibits, at limit status), velocity control information (e.g., operating, at commanded velocity, at zero velocity, commanded velocity, current velocity), position control (e.g., operation, at home position, commanded position, current position, position error), torque control (e.g., operating, commanded torque). converter child device information, inverter child device information, DC bus input information, or the like. The maintenance data may include component information and environmental condition information. The sustainability data may include energy information, like a total amount of consumed energy over asset or part runtime.

The motor drive 132 may include dozens of parts within its subsystems 1-7, a subset of which is illustrated via the parts list 114. The parts list 114 may include an indication 134 of a part quantity present or installed within the asset. The parts list 114 may include an indication 136 of a catalog number or other identifier that may uniquely identify that installed part or a class or type of the installed part. The parts list 114 may include an indication 138 of a description associated with the installed part. A logical arrangement of the parts list 114 may associate the indications 134, 136, and 138 together to identify an installed part of the asset.

The parts list 114 of FIG. 4 is merely an excerpt of a total parts list associated with the motor drive 132. With one asset (e.g., the motor drive 132) being associated with so many parts, tracking changes or predictions associated with respective parts may become increasingly complex as monitoring is expanded to a larger portion of or the entirety of the industrial automation system 10. Thus, computing systems and methods able to enhance industrial automation system 10 monitoring and control operations based on part list 114 management may be desired.

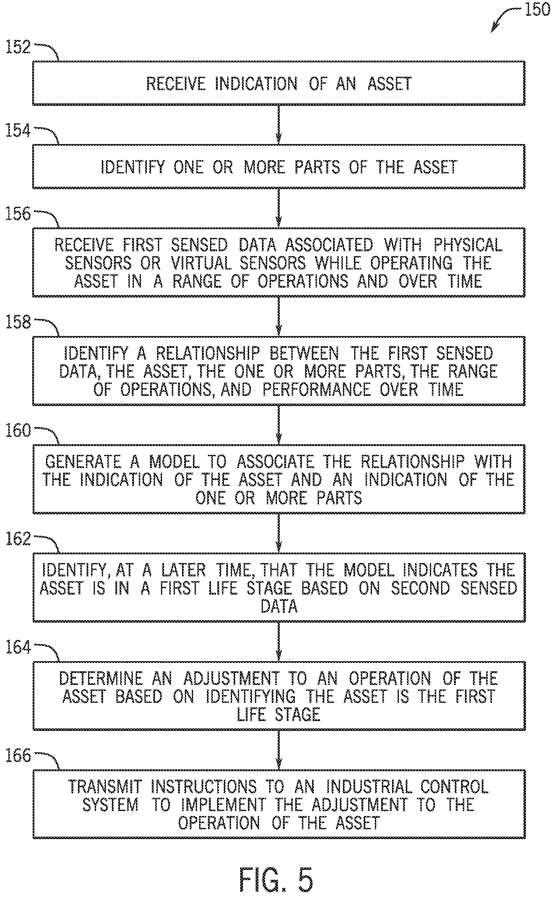

As noted above, it may be desired to track life stages (e.g., indications of health, scores corresponding to healthiness of the part and/or asset) of one or more parts of the part list 114 to help obtain an indication of a health of an asset. To do so, the cloud-computing system 108 may model a range of healthy and unhealthy behaviors of the parts. In doing so, real-time performance of a part may be compared to modelled behaviors of the part to help identify a life stage of that part relative to the modelled behaviors. FIG. 5 illustrates a flowchart of operations that may be performed by the cloud-computing system 108 to generate a model of a part and/or an asset, which may be used at a later time to determine a life stage of the part or asset and to identify an adjustment to an operation of the part or asset based on the life stage.

FIG. 5 is a flow chart of a process 150 for implementing the adjustment to an operation of an asset based on an indication of the asset. Although the process 150 is described as being performed by the cloud-computing system 108, it should be understood that in some systems another suitable computing device may perform some or all of the operations of the process 150. The operations of the process 150 are shown in a specific order, and it should be understood that in some systems the operations may be performed with additional or alternative operations and in a same or different order. Indeed, sometimes one or more operations may be omitted in an actual implementation.

At block 152, the cloud-computing system 108 may receive an indication of an asset, such as via the edge device 110. The edge device 110 may physically couple to the industrial control system 20 disposed on-premise relative to the industrial automation system 10. The industrial automation device may send the identity indication to the edge device 110 in response to being powered on in the industrial automation system 10 for a first time. Indeed, the indication of the asset may be transmitted to the cloud-computing system 108 in response to the asset being installed in the industrial automation system 10, in response to an automated model generation operation executed via the industrial control system and/or an IT hardware to systematically generate models corresponding to installed assets, or the like. In some cases, the indication of the asset may be sent based on input received via the user interface 18. The indication of the asset may identify to the cloud-computing system 108 to generate a data model for that indicated asset. The indication of the asset may include an indication of an identify of the asset. The identity of the asset may correspond to an indication of a vendor identification that manufactured the asset, a device type of the asset, a product code of the asset, a respective revision indication of the asset or software installed in a memory of the asset, a serial number of the asset, a product name of the asset, a catalog number of the asset, and indication of an input/output connection mapping corresponding to the asset or the like.

At block 154, the cloud-computing system 108 may identify one or more parts of the asset based on the indication of the asset from block 152. The cloud-computing system 108 may operate based on large language models, machine learning software, or the like to identify one or more parts to be included in a parts list 114 based on the asset indication from block 152. The cloud-computing system 108 may determine which parts to be indicated in the parts list 114 based on part lists 114 that it has access to in storage and/or parts lists that the large language models, machine learning software, or the like were trained on relative to the indication of an identify of the asset. Indeed, the indications of the part lists 114 may correspond to indication of a vendor identification that manufactured the asset, a device type of the asset, a product code of the asset, a respective revision indication of the asset or software installed in a memory of the asset, a serial number of the asset, a product name of the asset, a catalog number of the asset, and indication of an input/output connection mapping corresponding to the asset or the like. In this way, the cloud-computing system 108 may reference the indication of the asset and storage 112 to identify the parts to be included in the part list 114 for that asset. For example, identifying one or more parts may be based on selecting a part list 114 from the part lists 114 in storage 112. This may be done based on generating a classification weight data based on the identity indication from block 152 and selecting the part list 114 based on the classification weight data relative to a part list prediction indicated via the classification weight data. The part list prediction may be correlated to various possibilities of classification weight data during the training process associated with the large language models, machine learning software, or the like. The parts identified may be identified based on subsystems of the asset, like those illustrated in FIG. 4.

At block 156, the cloud-computing system 108 may receive first sensed data associated with sensors 28 while operating the asset in a range of operations over time. The sensors 28 may include physical or virtual sensors 28. The first sensed data may indicate a performance of the asset over the range of operations and over the time period of data acquisition. The first sensed data may be data represented through symbolic data structures. In systems that use symbolic data structures for operational control, commands may be applied to the industrial automation systems using the symbolic data structures.

At block 158, the cloud-computing system 108 may identify a relationship between the first sensed data, the asset, the one or more parts, the range of operations, the performance of the asset over time and/or over the range of operations, or a combination thereof. The first sensed data may indicate at a time of sensing a value associated with the operation of the asset. The first sensed data may contribute to an indication of the performance of the asset over time. The one or more parts may be identified at block 154. The first sensed data may correspond to the one or more parts. For example, a part may be a fan. When a fan, the sensed data may correspond to an ambient temperature of the fan. The ambient temperature of the fan may correspond to a performance of the asset over time, such as how changing in operational speed of the asset affects ambient temperature of the fan (e.g., the operational speed of the asset being proportionally and positively related to the ambient temperature of the part). The relationship identified may be an indication of a trend or an indication of a causal relationship between changes in the performance of the asset over time over the range of operations. The relationship may be used to identify performance of the asset and its respective parts over time as performance or aging of the asset occurs.

In this example, the identified relationship may correspond to an indication that the operational speed of the asset being proportionally and positively related to the ambient temperature of the part. The range of operations may correspond to a range of operational set points between a minimum operational set point and a maximum operational set point. Any suitable number of increments may be used between the minimum operational set point and the maximum operational set point to establish the range of operations. For example, a fan as the part may be able to operate at several different set points between a minimum operational set point and a maximum operational set point, where the range of operations corresponds to the several different set points, the minimum operational set point, and the maximum operational set points. In some cases, a subset of operational set points are used. For example, a fan capable of being operated at several different set points may have a subset of the set points indicated as part of its range of operations.

The type of data being acquired and used to indicate the performance of the asset and/or the part over time may be any suitable data able to be acquired about the asset or the part. For example, the first sensed data may include one or more indications of humidity of an ambient environment, airflow, vibration, volume of smoke, temperature, type of enclosure, gas corrosion, rotations per minute or time period, load inertia, voltage, current, control signal, configuration, motion configuration, motion command, or the like.

At block 160, the cloud-computing system 108 may generate a data model 116 to associate the relationship with the indication of the asset and an indication of the one or more parts. The cloud-computing system 108 may store the generated data model 116 in the storage 112. By determining the relationship, and including in the data model 116, the cloud-computing system 108 may have access to one or more relationships or indications of relationships that show how one or more sensors 28 sense the aging of the asset and its parts over time to better predict, in the future, at what life stage that asset or a part is at based on the data models 116 and based on real-time acquired data. The model generation of blocks 152-160 may occur during a manufacturing operation to identify an ideal operation of the asset or part that ages over time through use in a testing system. The model generation of blocks 152-160 may occur in situ in the industrial automation system 10 to identify, through the relationship, a normal operation of a newly installed asset or part. When performing the model generation in situ, the recorded relationship may be used to adjust a relationship indicative of the ideal operation to calibrate the relationship captured in the testing system to the in situ performance. The data model 116 generated in situ may be trained or generated over time based on the performance of the asset or part in situ in the industrial automation process.

At block 162, the cloud-computing system 108 may identify, at a later time, that the data model 116 indicates the asset is in a first life stage based on second sensed data from the sensors 28. The life stages may correspond to a health status, such as 100% full health, 75% full health, 50% full health, 25% full health, 10% full health, 0% full health, or the like. The life stages may correspond to indication such as "healthy," "caution," "replace," "critical," or the like. Life stages may be set by indications received via one or more GUIs. The indications may correspond to operator-specified or manufacturer-specified operational ranges related to the asset, the industrial automation system 10, or the like. The second sensed data may be acquired via physical or virtual sensors 28. When the life stage corresponds to a health status, the percentage of the health status may be identified by comparing the second sensed data to one or more thresholds and/or to a data model 116 of the part's performance. For example, the second sensed data may indicate a 75% full health life stage based on past performance captured in the data model 116 of a part associated with the second sensed data. In some cases, the percentage is based by comparing the second sensed data value to a value of an indication of the data value when the part is at 100% full health to proportionally indicate a relative amount of degradation.

At block 164, the cloud-computing system 108 may determine an adjustment to an operation of the asset based on identifying the asset is in the first life stage. Sometimes the adjustment determined by the cloud-computing system 108 is in response to the identification of the asset being in the first life stage (or any life stage indicated by the second sensed data). The cloud-computing system 108 may take a predictive approach. When predictive monitoring, the cloud-computing system 108 may determine whether the asset is being operated with setpoints suitable or unsuitable for asset longevity and/or part longevity based on the second sensed data. Based on this determination, the cloud-computing system 108 may determine to adjust the operation of the asset based on whether the setpoints are promoting longevity and based on the life stage of the asset. The adjustment determined for the asset when in the first life stage may be less than an adjustment determined for the asset in a second life stage. In some systems, the cloud-computing system 108 may track degradation over time based on sensed data (e.g., second sensed data, other sensed data). The cloud-computing system 108 may detect advanced or increasing degradation relative to an amount of degradation indicated as expected by the data model 116. In these cases, the cloud-computing system 108 may generate the adjustment to the asset to slow degradation or to debug operation of the asset. For example, when sensed data corresponds to an insulated-gate bipolar transistor (IGBT), the cloud-computing system 108 may identify mechanics of the asset degrading the IGBT overtime and adjust the asset to reduce the mechanics. Indeed, the cloud-computing system 108 may determine the adjustment to the operation of the asset to prolong the life of the parts of the asset. Data models 116 referenced at block 160 and/or the block 164 may correspond to the asset and one or more parts of the asset. The cloud-computing system 108 may access these data models 116 from storage 112 to identify what adjustments to be made to the asset to prolong the life of the parts based on previously identified performances of the asset and/or the part.

At block 166, the cloud-computing system 108 may transmit one or more instructions to the industrial control system 20 to cause the industrial control system 20 to implement the adjustment determined at block 164. In some cases, the industrial control system 20 generates an alert to an GUI to validate the instruction prior to implementation. The industrial control system 20 may generate one or more control signals based on the one or more instructions to operate one or more assets to implement the adjustment.

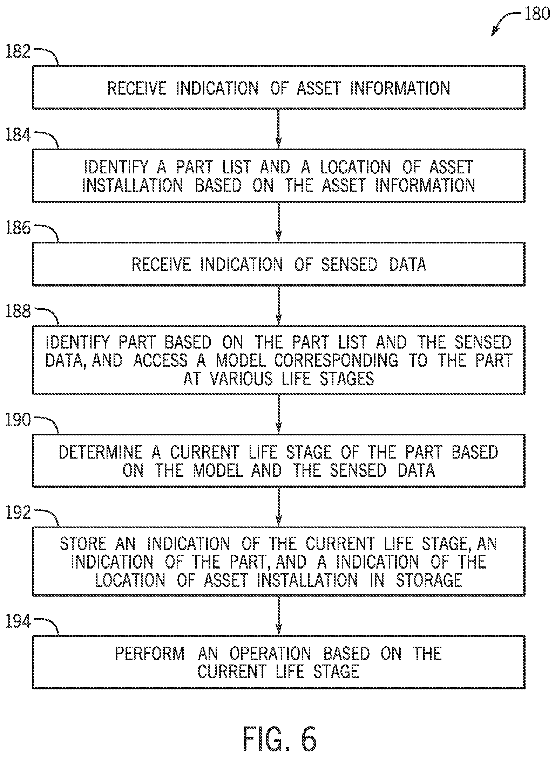

Once a life stage is identified at block 162, a variety of improvements to industrial automation system 10 operations may be implemented, which may help increase up-time to drive increases in production while reducing non-productive resource consumption or environmental damages from unplanned maintenance outages. For example, the cloud-computing system 108 may determine what parts should be in an asset based on other experiences with that type of asset. Based on those parts, the cloud-computing system may identify life stages of those parts and determine whether to recommend replacing any of those parts based on the modelled behaviors of the parts and sensed data indicating the real-time performance of those parts. FIG. 6 illustrates a flowchart of operations that may be performed by the cloud-computing system 108 to determine parts of an asset, to determine life stages of the asset and the parts, and to recommend to replace one or more of the parts based on the life stages.

FIG. 6 is a flow chart of a process for generating a recommendation to replace a part based on an indication of asset information. Although the process 180 is described as being performed by the cloud-computing system 108, it should be understood that in some systems another suitable computing device may perform some or all of the operations of the process 180. The operations of the process 180 are shown in a specific order, and it should be understood that in some systems the operations may be performed with additional or alternative operations and in a same or different order. Indeed, sometimes one or more operations may be omitted in an actual implementation.

At block 182, the cloud-computing system 108 may receive an indication of asset information from the storage 112. The asset information received may include an asset identifier, a model number, an age, a running duration, an indication of power consumed, or the like. At block 184, the cloud-computing system 108 identify a part list 114 and a location 118 of asset installation based on the asset information.

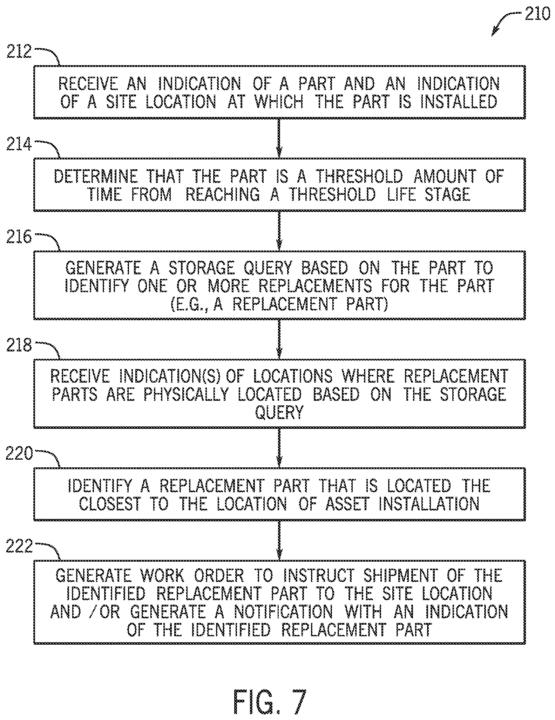

In some systems, once an asset is communicatively connected to an industrial control system 20 and thus to the cloud-computing system 108 (e.g., through the edge device 110), the cloud-computing system 108 may determine what part list 114 corresponds to the asset. The cloud-computing system 108 may access indications of relevant spare parts list from the storage 112, which may have been generated as part of a training operation to train the cloud-computing system 108 on a relationship between asset information and parts lists 114. Over time, the cloud-computing system 108 may refine the associations between what parts go with what assets based on site-specific types of installation nuances. The cloud-computing system 108 may generate the part list 114 based on detection of what the asset is connected to (e.g., application, relative location within process), a model number, age of the asset, elapsed run duration of the asset, average power consumption of the asset, or the like. Based on this, the cloud-computing system 108 may monitor the asset and make recommendations as to spare parts as installed parts deteriorate or are predicted to deteriorate, as described below with blocks 186-194 and/or FIG. 7.

For example, at block 186, the cloud-computing system 108 may receive an indication of sensed data from the industrial control system 20, where the sensed data corresponds to the asset indicated via the asset information. At block 188, the cloud-computing system 108 may identify a part based on the part list 114 that corresponds to the sensed data or that is associated with the sensed data. The sensed data may be acquired relative to the part and/or the sensed data may be implicated by a relationship indicated by a model of a part, and thus the sensed data may relate to multiple parts of one or more assets at a same time. An example of sensed data that may be associated with multiple parts at a same time is an ambient temperature sensed data, an input power sensed data, ambient environment audio data, ambient environment image sensor data, a control configuration for a line of movers that include multiple assets each with their own parts, and so on. The cloud-computing system 108 may access a data model 116 from the storage 112, where the data model 116 corresponds to the part at various life stages. Indeed, the data model 116 may include indications of sensed data expected to be received while the part is operating at each life stage of multiple life stages that could be associated with the part. At block 190, the cloud-computing system 108 may determine a current life stage of the part based on the data model 116 and the sensed data. At block 192, the cloud-computing system 108 may store an indication of the current life stage, an indication of the part, and an indication of the location of asset installation in storage 112. With blocks 186-192, the cloud-computing system 108 may be taught (e.g., based on the data models 116 being generated) previous behaviors of the asset and future performance of the asset relative to the current performance of parts indicated in the part list 114. Based on knowing where the asset came from and where the asset is going from an operational output and efficient performance standpoint, the cloud-computing system 108 may identify a life stage on the relative continuum of life of the asset indicated via the data models 116 and the sensed data. In some cases, the cloud-computing system 108 may operate a management tool software loaded into its memory takes the part list 114 and may identify from the part list 114 which of the asset's parts are approaching a maintenance condition. The cloud-computing system 108 may do so based on the sensed data and the indications of operations of the data models 116 of the asset. Sometimes the cloud-computing system 108 evaluates asset performance based on operations of assets connected to the asset (e.g., an operation of one or more assets in a sub-system).

In some systems, to determine whether a part or asset is to be replaced, the cloud-computing system 108 may compare the first sensed data to a corresponding data model 116 to identify a life stage of the part at a time when the first sensed data was acquired. The cloud-computing system 108 may determine to instruct the part or asset replacement based on the life stage identified and a threshold stage or value at which (e.g., once crossed) to trigger a generation of a replacement instruction. To obtain the corresponding data model 116, the cloud-computing system 108 may generate a search query to search data stored in storage 112 based on the metadata of the first sensed data, where the query operation may return results of the data model 116 as corresponding to the part and the first type of data. Should more than one corresponding data model 116 be returned as a result, the cloud-computing system 108 may use other information from the metadata or context of the industrial automation system 10 to select one or more of the data models 116 for use at block 264. In some cases, the cloud-computing system 108 updates the life stage of all corresponding data model 116 based on the first sensed data and thus may receive an indication of multiple parts to be replaced or adjustments to be performed based on the life stages.

At block 194, the cloud-computing system 108 may perform an operation based on the life stage determined at block 190, such as transmitting an indication of the current life stage, generating an instruction to recommend replacing the part based on the current life stage, generating an instruction to recommend repairing the part based on the current life stage, generating an instruction to adjust an operation of the part (e.g., a setpoint) based on the current life stage, or any combination thereof. The cloud-computing system 108 may transmit an indication of the recommendation and the life stage to the industrial control system 20, an additional computing system, or both. The additional computing system and the industrial control system 20 may be disposed on-premise relative to the industrial automation system 10 and outside a computing domain associated with the cloud-computing system 108 (e.g., a cloud-computing domain enabled through cloud/remote server 30). The cloud-computing system 108 may be disposed off-premise relative to the industrial automation system 10 and may transmit an indication of the recommendation and the life stage as part of a graphical user interface to one or more user equipment.

To indicate the current life stage, the cloud-computing system 108 may store an alphanumeric indication of the number of years remaining to storage 112 and/or may transmit the indication to the industrial control system 20. The industrial control system 20 and/or the additional computing system may update a GUI or HMI based on the indication. The GUI or HMI may be updated to indicate that the part "has been used for" a first time period "so it likely has" a second time period "remaining." For example, "the fan has been used for X years so it likely has Y time left." The cloud-computing system 108 may determine the first time period as being a degradation-adjusted age. For example, the fan may have been operated for 2 years and experienced relatively large amounts of the degradation that equates to an operation of 6 years.

As another example of the operation being performed at block 194, the cloud-computing system 108 may generate an instruction to debug operation of the asset or part and/or to recommend replacing the part based on the current life stage. These instructions may be included in a work order generated by the cloud-computing system 108 and accessible by computing devices of the industrial automation system 10. The cloud-computing system 108 may walk an operator through a debug of a current operation of the asset if the cloud-computing system 108 identifies that the asset is performing outside of a threshold range. The cloud-computing system 108 may recommend a part replacement. For example, based on the identified life stage and/or based on the debug operation.

If the cloud-computing system 108 recommends a part replacement, the cloud-computing system 108 may coordinate identifying where compatible replacement parts are physically located (e.g., in a warehouse associated with an industrial automation system 10, in another warehouse of an enterprise associated with the industrial automation system 10, in a manufacturer warehouse) and coordinate the automatic procurement and shipping instructions to deliver any off-site components to be used to perform the replacement to the warehouse associated with the industrial automation system 10. FIG. 7 illustrates a flowchart of operations that may be performed by the cloud-computing system 108 to determine where replacement parts for the part recommended to be replaced are located and to arrange for shipping of one of those parts to the location where the replacement is to occur. By centralizing procurement and shipping instructions, fewer computing resources may be consumed by enterprise-associated computers due to fewer computing systems being used to generate these types of instructions. Furthermore, fewer material resources may be consumed and waste may be reduced by coordinating fulfilment operations across multiple industrial automation systems of the enterprise and/or associated with manufacturers and distributers.

To elaborate, FIG. 7 is a flow chart of a process 210 for implementing a replacement part delivery based on an indication of a part to be replaced and a site location of the replacement. Although the process 210 is described as being performed by the cloud-computing system 108, it should be understood that in some systems another suitable computing device may perform some or all of the operations of the process 210. The operations of the process 210 are shown in a specific order, and it should be understood that in some systems the operations may be performed with additional or alternative operations and in a same or different order. Indeed, sometimes one or more operations may be omitted in an actual implementation.

At block 212, the cloud-computing system 108 may receive an indication of a part and an indication of a site location at which the part is physically installed within an asset. The site location may correspond to the industrial automation system 10.

At block 214, the cloud-computing system 108 may determine that the part is a threshold amount of time from reaching a threshold life stage. The threshold amount of time may be any suitable amount of time, such as 1 month, 3 months, 1 year, or the like. The threshold life stage may correspond to "end-of-life," "at-risk," or a percentage of life remaining, such as "20%, "40%," or any suitable threshold. The threshold life stage and/or the threshold amount of time may be indicated via an input received via a GUI or HMI associated with the industrial control system 20 and communicated to the cloud-computing system 108 and/or associated with the cloud-computing system 108. An IT device may communicate with the cloud-computing system 108 to transmit an indication of the threshold amount of time and/or the threshold life stage.

At block 216, the cloud-computing system 108 may generate a storage query based on the part being the threshold amount of time from reaching the threshold life stage. The storage query may identify one or more replacements for the part (e.g., a replacement part). For example, the storage query may be based on a model number of the part and result in the return of indications of replacement parts with matching model numbers. The query of the storage 112 may return indications of physical storage locations of the replacement parts.

Indeed, at block 218, the cloud-computing system 108 may receive one or more indications of locations where replacement parts are physically located based on the storage query. For example, the cloud-computing system 108 may receive one or more indications of locations corresponding to asset or part manufacturer plant warehouses, a distributor warehouse, enterprise warehouses (e.g., in network).

At block 220, the cloud-computing system 108 may identify a replacement part that is located the closest to the indication of the location of asset installation. This may be a physical proximity determination. The indication of locations may be such that a comparison between the physical location of the site location may be made by the cloud-computing system 108 to evaluate which of the replacement parts are currently stored relatively more physically proximate to the site location. The indication of locations may correspond to global positioning coordinates (e.g., "GPS" coordinates) or another indication of location.

At block 222, the cloud-computing system 108 may generate a work order to instruct shipment of the identified replacement part to the site location and/or generate a notification with an indication of the identified replacement part. The cloud-computing system 108 may receive an indication when the replacement part arrives to the site location and in response may generate a work order to trigger scheduling of the replacement operation.

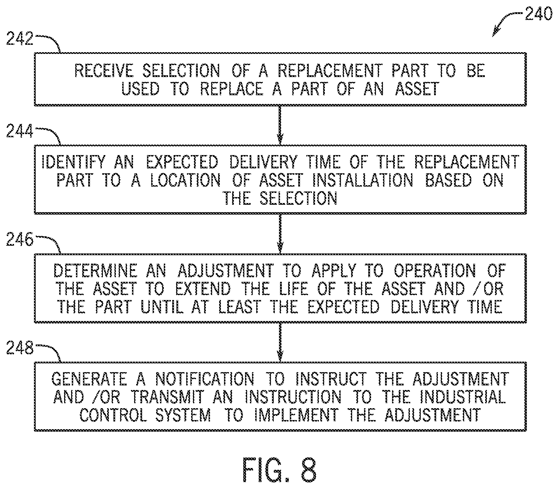

With the foregoing in mind, the cloud-computing system 108 may generate one or more work orders to procure replacement parts based on the operations of process 210. The cloud-computing system 108 may generate one or more works to implement the part replacement (e.g., by instructing an operator to perform the part replacement) or the like. As part of this, the cloud-computing system 108 may determine an estimated shipping time for a replacement part physically located outside the warehouse associated with the industrial automation system 10. In response to determining the estimated shipping time, the cloud-computing system 108 may generate and send instructions to an industrial control system to adjust operation of the asset having its part replaced to extend the life of the part for at least a duration of time equaling the estimated shipping time (e.g., "increased lifespan mode"). FIG. 8 elaborates on these operations that may be performed by the cloud-computing system 108 to instruct operation of an asset and/or a part in a life extension mode while waiting for a replacement part to be delivered.

FIG. 8 is a flow chart of a process 240 of implementing an operational adjustment of an asset and/or part based on a selection of a replacement part of the asset (e.g., to operate the part in a life extension mode until a replacement part is delivered to the industrial automation system 10. Although the process 240 is described as being performed by the cloud-computing system 108, it should be understood that in some systems another suitable computing device may perform some or all of the operations of the process 240. The operations of the process 240 are shown in a specific order, and it should be understood that in some systems the operations may be performed with additional or alternative operations and in a same or different order. Indeed, sometimes one or more operations may be omitted in an actual implementation.

The process 240 may involve the cloud-computing system 108 generating an indication of the recommendation to replace a part and an indication of a scheduled time for the replacement to occur. The cloud-computing system 108 may determine that the scheduled time is a threshold amount of time after a current time. The cloud-computing system 108 may determine a first adjustment to an operation of the part based on a life extension mode based determining that the scheduled time is the threshold amount of time after the current time. The first computing system may determine the first adjustment to the operation of the part based on a life extension mode at least in part by receiving an indication of desired production adjustment and determining that operating the part based on the life extension mode causes the desired production adjustment. The cloud-computing system 108 may transmit an instruction of the first adjustment to an industrial control system of the industrial automation system via the edge device 110.

To elaborate, at block 242, the cloud-computing system 108 may receive a selection of a replacement part. In some cases, the cloud-computing system 108 may, on its own, select the replacement part based on identifying replacement part candidates that each match a part identifier or serial number of the part to be replaced and selecting one of the candidates based on a physical proximity of the replacement part storage location to the site location, as described with respect to FIG. 7. In some cases, the cloud-computing system 108 may present an indication of the replacement part candidates and may receive an indication of a selected replacement part of the presented indication of candidates from a GUI, a HMI, or input device, such as the user interface 18.

At block 244, the cloud-computing system 108 may identify an expected delivery time of the replacement part to the site location of the asset (e.g., a location of the asset installation). As described above with block 220, an indication of location associated with the replacement part may be used to determine how far away the replacement is from the site location. Based on other delivery fulfillment times or data, the cloud-computing system 108 may determine an estimated delivery time of the replacement part. The cloud-computing system 108 may identify the expected delivery time based on receiving an indication of the expected delivery time from a third-party computing system, a distributor-associated computing system, invoice data, or the like.

At block 246, the cloud-computing system 108 may determine an adjustment to apply to the operation of the asset to extend the life of the asset and/or the part until at least the expected delivery time of the replacement part from block 244. This adjustment to the operation of the asset and/or the part may correspond to an adjustment to "increase lifespan" and/or an adjustment to operate the asset and/or the part in an "increased lifespan mode."

At block 248, the cloud-computing system 108 may generate a notification to instruct the adjustment determined at block 246 and/or may transmit an instruction to the industrial control system 20 to implement the adjustment determined at block 246. By performing an operation to adjust the operation of the asset or part to implement the determined adjustment at block 246, the cloud-computing system 108 may proactively increase a lifespan of the asset or the part to be replaced until at least the replacement part (e.g., replacement asset, replacement part) is delivered to a warehouse of the industrial automation system 10. In some cases, the increased life span mode may proactively increase the lifespan of the asset or part based on the estimated delivery time and a time threshold used to buffer the delivery of the replacement part or asset. The cloud-computing system 108 may instruct the industrial control system 20 to implement the adjustment determined at block 246 (e.g., "increased lifespan mode") in operations of one or more assets. The cloud-computing system 108 may generate one or more notifications to instruct an operator to implement the adjustment determined at block 246. When instructing the operator, the cloud-computing system 108 may generate the one or more notifications through alerts or changes to a GUI, alerts or changes to a GUI, one or more work orders indications, or the like. The one or more notifications may include one or more exact setpoint or parameter recommendations (e.g., "increase speed to XX rotations-per-minute of asset A), a relatively more generalized recommendation (e.g., "increase speed of asset A"), or a combination of the two.

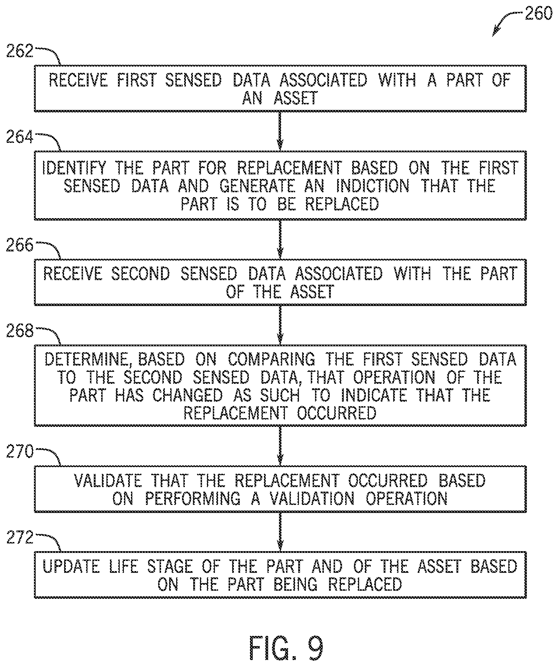

After a repair occurs, the cloud-computing system 108 may use the data model 116 of the part and/or the asset to confirm that the repair occurred. Changes in sensed data acquired for that part and/or asset may indicated a change in performance relative to pre-repair performance. The cloud-computing system 108 may validate that the part replacement occurred based on additional sensed data (e.g., of a different type) and/or based on operator input (e.g., presenting an alert on a human-machine interface (HMI) to confirm that the part replacement was performed). When the part is validated as replaced, the cloud-computing system 108 may reset the life stage of the part after replacement. The reset of the life stage of the part may cause a change of the life stage of the asset. When the asset is validated as replaced, the cloud-computing system 108 may reset the life stage of the asset after replacement. FIG. 9 illustrates a flowchart of operations that may be performed by the cloud-computing system 108 to identify that the part replacement occurred and, in response to identifying, resetting one or more life stages based on the part replacement.

FIG. 9 is a flow chart of a process 260 of validating that a replacement occurred based on sensed data associated a part of an asset. Although the process 260 is described as being performed by the cloud-computing system 108, it should be understood that in some systems another suitable computing device may perform some or all of the operations of the process 260. The operations of the process 260 are shown in a specific order, and it should be understood that in some systems the operations may be performed with additional or alternative operations and in a same or different order. Indeed, sometimes one or more operations may be omitted in an actual implementation. Furthermore, although FIG. 9 is described as directed toward parts, it should be understood that similar operations may be applied to asset replacements. For example, at block 262, the cloud-computing system 108 may receive first sensed data associated with the asset as a whole.

The process 260 may involve the cloud-computing system 108 determining that the part has been replaced by a replacement part based on comparing sensed data received after the scheduled time corresponding to expected sensed data indicated by the device model. The cloud-computing system 108 may determine a second adjustment to the operation of the part to exit the life extension mode based on determining that the part has been replaced by the replacement part. The cloud-computing system 108 may transmit an instruction of the second adjustment to an industrial control system of the industrial automation system via the edge device.

To elaborate, at block 262, the cloud-computing system 108 may receive first sensed data associated with a part of the asset. The first sensed data may correspond to a first type of data. The first sensed data may be received from a sensor 28. Metadata of the first sensed data may indicate the asset and/or the part to the cloud-computing system 108. Multiple types of data may be used to distinguish life stages from each other in data models 116 of parts and/or assets, and thus at block 262 multiple sensed data of different types may be received. For example, the data model 116 may correspond to a line voltage (e.g., first type of data), an output current (e.g., second type of data), a frequency (e.g., third type of data) of a specific drive (e.g., asset) of the industrial automation system 10, and may thus the data model 116 may associate respective combinations of line voltages, output currents, and frequencies with respective life stages of the drive. The data model 116 may associate the respective life stages based on the indications of earlier sensed data being used to identify when different thresholds and/or ranges of the various types of data correspond to different life stages.

At block 264, the cloud-computing system 108 may identify the part for replacement based on the first sensed data. The cloud-computing system 108 may generate an indication that the part is to be replaced, such as based on the operations associated with FIG. 6. The cloud-computing system 108 may detects the replacement and resets the lifetime of the asset or the part based on the replacement, such as at blocks 266-272.

For example, at block 266, the cloud-computing system 108 may receive second sensed data associated with the part of the asset. The second sensed data may be received after the part (e.g., which was indicated for replacement at block 264) is replaced. The second sensed data may be of a same type of data as the first sensed data from block 264 and obtained later in time.

The cloud-computing system 108 may determine that a replacement of a part occurred at block 268, for example, by identifying that operation of the part has changed based on comparing the first sensed data to the second sensed data and/or the second sensed data to the data model 116. The change of the operation may indicate that the replacement occurred. The cloud-computing system 108 may determine a replacement of a part occurred based on detecting the change in sensed data and/or based on reading one or more indications from the storage 112 corresponding to a previously generated work order instructing the replacement of the part (e.g., operations of process 180), a previously generated work order instructing the shipment of a corresponding replacement part to be delivered to the industrial automation system (e.g., operations of process 210), and/or a previously generated instruction to operate an associated asset into an increased lifespan mode (e.g., operations of process 240). These indications referenced by the cloud-computing system 108 may correspond to previous replacement-supporting instructions generated by the cloud-computing system 108 to coordinate the replacement of the part, and thus may indicate that a replacement was instructed to occur and that a replacement occurred due to the change in sensed data associated with the part.

At block 270, the cloud-computing system 108 may validate that the replacement occurred based on performing a validation operation. The validation operation may include receiving an indication in response to an operator completing a replacement part work order. This indication may be received at the user interface 18 and sent to the industrial control system 20, which may send the indication, via the edge device 110, to the cloud-computing system 108. The validation operation may involve the cloud-computing system 108 comparing part or asset operation over time to the data model 116 that indicates an expected operation when the part is new. In some cases, the cloud-computing system 108 may first try to validate based on the data model 116, and if operational improvement is less than a threshold of improvement, then a request for the validation may be instructed to be presented via the user interface 18.

At block 272, the cloud-computing system 108 may update an indication of the life stage of the part and of the asset based on determining that the part was replaced at block 268, and, in some systems, based on the validating the replacement of the part at block 270. Although replacement is described, similar operations may apply to a repair operation. When a repair or replacement occurs for a part, the cloud-computing system 108 may reset the life of the asset and/or part, such as reset or adjust an indication of a time of running hours. This may be done as opposed to having an operator perform a manual adjustment of the indication at an HMI of the asset that may use relatively high number of input combinations and computing resources relative to that consumed by the cloud-computing system 108 communicating with the industrial control system 20. At this higher system-level, the cloud-computing system 108 may recalculate the running calculation for the asset and instruct the industrial control system 20 to adjust the indication of the time of running hours stored inside the asset and/or stored in association with the asset (e.g., in storage accessible to the industrial control system 20). For example, before a replacement a mixer life stage may be at 80%. When one of multiple drives is replaced for a mixer, the cloud-computing system 108 may instruct the industrial control system 20 to adjust the running hours for the mixer to correlate to the sum of the time of running hours of the multiple drives including the new replacement drive (e.g., 0 running hours), which may change the life stage to be 85%, where 100% may correspond to the life stage when the mixer was newly installed.

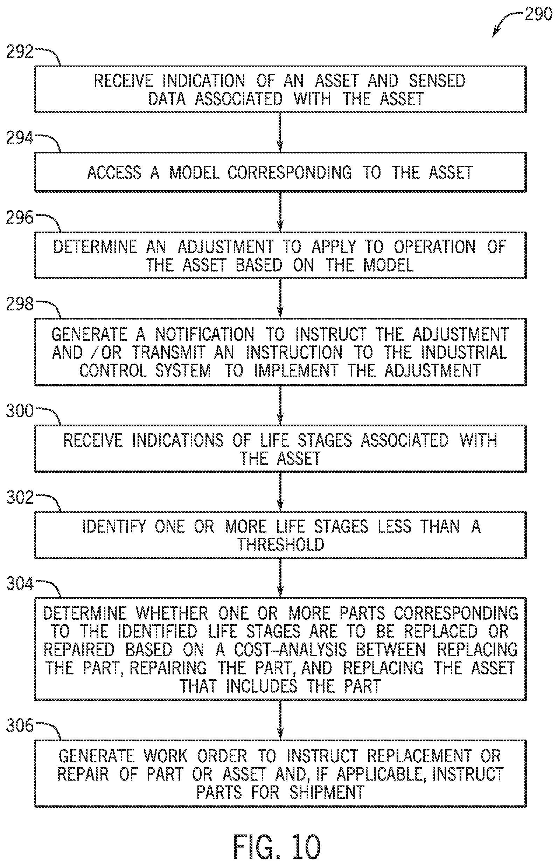

Using similar operations, the cloud-computing system 108 may schedule maintenance operations for a shutdown and/or as part of normal maintenance operations. For example, given a prompt with how long a shutdown is going to be, the cloud-computing system 108 may identify part replacements, part repairs, asset replacements, or asset repairs to be performed during the length of the shutdown. The cloud-computing system 108 may do so based on prioritizing maintenance recommendations based on criticality of the recommendation, a time of completion, and an indication of whether the asset is to be isolated from the process during the maintenance operation. To do so, the cloud-computing system 108 may perform a cost-benefit analysis based on cost to repair a part, cost to replace the associated asset, cost to replace the part, a time to repair, a time to replace, and relative changes to life stages based on the repair or replacement. For example, FIG. 10 illustrates a flowchart of operations that may be performed by the cloud-computing system 108 to determine an optimization in system operations and to determine part or asset replacements or repairs based on a cost-benefit analysis.

FIG. 10 is a flow chart of a process for determining to instruct part repairs or replacements based on a cost-benefit analysis. Although the process 290 is described as being performed by the cloud-computing system 108, it should be understood that in some systems another suitable computing device may perform some or all of the operations of the process 290. The operations of the process 290 are shown in a specific order, and it should be understood that in some systems the operations may be performed with additional or alternative operations and in a same or different order. Indeed, sometimes one or more operations may be omitted in an actual implementation.

At block 292, the cloud-computing system 108 may receive an indication of an asset and sensed data acquired in association with the asset. The sensed data may be transmitted to the cloud-computing system 108 from the industrial control system 20 along with an indication of an asset, where the sensed data may indicate an operation of the asset. At block 294, the cloud-computing system 108 may receive a data model 116 based on the asset and/or the sensed data. The sensed data and operations of blocks 292 and 294 performed based on the sensed data may correspond to some of the operations of blocks 262 and 264 of FIG. 9.

At block 296, the cloud-computing system 108 may determine an adjustment to an operation of the asset based on the data model 116. At block 298, the cloud-computing system 108 may generate a notification to instruct the adjustment and/or transmit an instruction to the industrial control system 20 to implement the adjustment. The operations of blocks 296 and 298 performed to determine and implement an operational adjustment may correspond to some of the operations of blocks 162, 164, and 166 of FIG. 9.

The cloud-computing system 108 may detect an operational pattern in how the asset is being used in and whether that type of operational pattern is contributing to additional degradation occurring. For example, the cloud-computing system 108 may detect that an asset is being driven relatively fast for a process, such as based on similar asset performance in a similar but separate process, which is contributing to faster part degradation. The cloud-computing system 108 may generate an instruction with an indication of the adjustment. The industrial control system 20 may present the indication of the adjustment via a GUI or HMI, such as through one or more notifications via the GUI and/or the HMI. The one or more notifications may include one or more exact setpoint or parameter recommendations (e.g., "increase speed to XX rotations-per-minute of asset A), a relatively more generalized recommendation (e.g., "increase speed of asset A"), or a combination of the two. The industrial control system 20 may implement the adjustment after an input to the GUI or HMI is received. In some cases, the industrial control system 20 may implement the adjustment in response to receiving the instruction.

At block 300, the cloud-computing system 108 may receive one or more indications of one or more life stages associated with the asset. The indications of life stages may be transmitted with indications of parts operating in the life stages. Thus, the cloud-computing system 108 may receive one or more indications of one or more parts and respective life stages of the one or more parts. Based on this data, the cloud-computing system 108 may determine which parts and/or assets to prioritize repair and/or replacement.

To elaborate, at block 302, the cloud-computing system 108 may identify one or more life stages that cross or is outside of a corresponding threshold. The threshold may correspond to a life stage out of a set of life stages that the respective part could operate in. For example, the threshold may indicate a percentage of health remaining or an alphanumeric association with a life stage. The cloud-computing system 108 may determine to instruct the part or asset replacement based on the life stage identified and a threshold stage or value at which (e.g., once crossed) to trigger a generation of a replacement instruction. The threshold life stage may correspond to "end-of-life," "at-risk," or a percentage of life remaining, such as "20%, "40%," or any suitable threshold.

At block 304, the cloud-computing system 108 may determine whether one or more parts corresponding to the identified life stages are to be replaced or repaired based on a cost-analysis between replacing the part, repairing the part, and replacing the asset that includes the part. The cloud-computing system 108 may detect changes to be made and recommend or implement the changes, such as by detecting a combination of operations that may generate greater throughput or be more power efficient and recommend or implement the operations. Based on the determination at block 304, the cloud-computing system 108, at block 306, may generate a work order to instruct replacement or repair of part or asset and, if applicable, instruct parts for shipment (e.g., such as based on operations of process 210).

In some systems, as part of some of the operations of blocks 304-306, the cloud-computing system 108 may recommend operational parameters that maintain current performance (e.g., ongoing throughput, ongoing production output) and reduce an undesired operation elsewhere, such as maintaining an output of liquid pumped or widgets produced without spinning a fan as hard as the fan had been. The cloud-computing system 108 may receive an indication of a desired production output. Based on the indication, the cloud-computing system 108 may recommend or implement corrective actions to adjust production output of the industrial automation system 10 while balancing performances of individual assets to implement the desired production output. As part of this, the cloud-computing system 108 may generate work orders to implement recommended corrective actions. In some systems, the cloud-computing system 108 may send an instruction to the industrial control system 20, which implements the corrective action via control signals to one or more implicated industrial automation devices.

At block 304, when determining to replace or repair a part or an asset, the cloud-computing system 108 may consider relative expected improvement to a life stage of an asset after the part replacement, such as may be part of the cost-benefit analysis. To elaborate, the life stage of an asset may be based on one or more life stages of associated parts (e.g., parts of the part list 114 for that asset). For example, a life stage of an asset when all parts are new may be 100% and after some wear occurs on one or more parts, the life stage of the asset may reduce to 80%. After the cloud-computing system 108 instructs a repair to a part, and the part is repaired, the asset life stage may increase to 85%, representing an aggregate of related part life stages. The relative improvement to the life stage of the asset from repair of that part may then be 5%. The cloud-computing system 108 may store indications of the relative improvements to various life stages of various assets based on various part repairs or replacements. When choosing between repairing a part, replacing a part, and replacing an asset, the cloud-computing system 108 may read from storage 112 indications of relative life stage changes, which may indicate the relative change to a life stage of an asset following a respective part repair or a respective part replacement. The indications may be generated by original manufacturers based on asset and/or part testing. The cloud-computing system 108 may generate the indications over time based on monitoring the effect of part replacement and/or part repairs of life stages of various assets.

For example, an asset may have an insulated-gate bipolar transistor (IGBT) part and a fan part. The IGBT may have 40 hours remaining of life and the fan may have 2 hours remaining life. The cloud-computing system 108 may decide between replacing or repairing the fan or replacing the entire asset based on relative improvements to life stage expected from the various repair or replacement activities. As noted above, the cloud-computing system 108 may do so through analyzing costs associated with the various repairs and replacements and comparing the costs to an analysis of benefits or improvements to life stages of that part, the associated asset, and the associated subsystem that the asset is disposed within (e.g., performing a cost-benefit analysis). Any suitable cost-benefit analysis may be performed by the cloud-computing system 108 based on indications of life stage improvements expected from a repair to a part, expected from the part being replaced, and the associated costs and time-to-completion associated with the part repair, part replacement, and asset repair.

One example cost-benefit analysis may involve the cloud-computing system 108 performing the following operations. The cloud-computing system 108 may receive indication of maintenance activity for a part. The cloud-computing system 108 may determine a life stage of the part and one or more additional devices (e.g., another part, the asset). The cloud-computing system 108 may access an indication of an excepted amount of time associated with performing the maintenance activity, which may be based on an indication of average operator completion, an indication of an expected range of times of completion based on operator completion, or the like. Indeed, the expected amount of time may be determined based on site-specific activity completion data. The cloud-computing system 108 may track the site-specific activity completion data, and thus determine the expected amount of time to completion, based on an amount of time of respective activities between an indication that a work order is being started to be worked on and an indication that the work order is completed. The cloud-computing system 108 may further associate the generated indications of expected completion times based on subsystems of the industrial automation system 10 and operators associated with the respective subsystems. The cloud-computing system 108 may access an indication of an expected cost associated with the maintenance activity (e.g., labor costs for hours worked, supplies cost). The cloud-computing system 108 may identify one or more additional maintenance activities based on the life stage of the one or more additional devices and the indication of time to perform the maintenance activity. The cloud-computing system 108 may determine a first indication of change in the life stage of an asset from repairing the part, determine a second indication of change in the life stage of the asset from replacing the part, and may determine whether the first indication is within a threshold amount from the second indication. When it is within the threshold amount, the cloud-computing system 108 may schedule the maintenance activity to implement replacing the part.

Another example cost-benefit analysis may include the cloud-computing system 108 receiving an indication of a scheduled downtime of a unit of the industrial automation system. This may include an indication of an amount of time for the scheduled downtime (e.g., shutdown). The cloud-computing system 108 may receive an indication of a subset of assets that are associated with a life stage that is less than a threshold life stage. The cloud-computing system 108 may receive an indication of life stages and/or criticality indications for each asset and each part of the subset of assets. The cloud-computing system 108 may receive an indication of recommended repair with metadata for each asset of the subset of assets. The cloud-computing system 108 may receive an indication of personnel costs for each type of recommended repair and, for each of the assets and each of the parts, an indication of purchase order information. Based on this, the cloud-computing system 108 may determine, for each of the first subset of parts, a cost to repair that part, a cost to replace that part, and a cost to replace the asset based on an indication of inventory and purchase order information and an indication of personnel costs. The cloud-computing system 108 may identify a subset of the parts to repair based on the cost to repair and the cost to replace. The cloud-computing system 108 may generate an indication of the subset of parts to repair and an indication of a remaining subset of parts to replace and associate the indications with a respective indication of total cost of maintenance activity for the part in local memory. The cloud-computing system 108 may identify a subset of the assets to replace based on, for each respective asset of the subset of assets, a cost to replace the asset and an aggregate of each of the indications of total cost of maintenance activity of its parts, and associate in memory an estimated time of maintenance activity for each asset based on a type of the asset. The cloud-computing system 108 may generate an indication of the subset of assets and parts to repair and an indication of the subset of assets or parts to replace based on removing, from the subset of parts to be repaired or the subset of parts to be replaced, any parts corresponding to the subset of assets to be replaced. The cloud-computing system 108 may generate a maintenance schedule based on the scheduled downtime of the unit based on the subset of the assets to replace, the subset of parts to replace, the subset of parts to repair, estimated maintenance activities times for each repair or replacement, component life stages, and/or criticality indications. In some cases, the cloud-computing system 108 may generate a maintenance schedule based on the scheduled downtime of the unit based on the subset of the parent devices to replace, the subset of child devices to replace, the subset of child devices to repair, estimated maintenance activities times for each repair or replacement, component life stages, and/or criticality indications. For example, the cloud-computing system 108 may generate the schedule based on prioritizing the maintenance activities according to relative priority and end inclusion of maintenance activities when the total time of completion of scheduled maintenance activities exceeds indication of an amount of time for the scheduled downtime. In these cases, the cloud-computing system 108 may have received an indication of 64 hours as the indication of an amount of time for the scheduled downtime, and thus may stop scheduling the maintenance activities in the maintenance schedule once the total time of completion of the maintenance schedule exceeds 8 hours of operator labor across 8 operators, 64 hours of operator labor, or any combination of operator labor and assigned operators implicated by the maintenance schedule of maintenance activities.

The operations of FIG. 10, as noted above, may be performed in response to an indication of a shutdown time window (e.g., indication of an amount of time for the scheduled downtime as a time duration during which one or more portions of the industrial automation system are isolated from a process and available for maintenance activities). Thus, determinations of part/asset replacements or repairs may be made based on estimated time to complete and criticality indications as a way to prioritize a subset of repairs to fit into the shutdown time window.

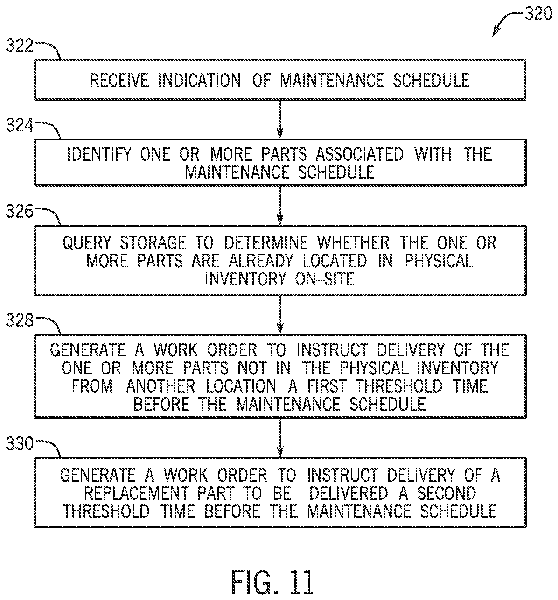

After generating the maintenance schedule, the cloud-computing system 108 may implement the maintenance schedule by generating one or more work orders to schedule the recommended maintenance work. For example, FIG. 11 illustrates a flowchart of operations that may be performed by the cloud-computing system 108 to arrange for shipment of parts associated with a maintenance schedule.

FIG. 11 is a flow chart of a process for implementing a replacement part delivery based on an indication of a maintenance schedule. Although the process 320 is described as being performed by the cloud-computing system 108, it should be understood that in some systems another suitable computing device may perform some or all of the operations of the process 320. The operations of the process 320 are shown in a specific order, and it should be understood that in some systems the operations may be performed with additional or alternative operations and in a same or different order. Indeed, sometimes one or more operations may be omitted in an actual implementation.

At block 322, the cloud-computing system 108 may receive an indication of a maintenance schedule. This may correspond to the maintenance schedule generated based on operations of FIG. 10. In some systems, the cloud-computing system 108 may receive an indication of a maintenance schedule from a respective IT asset, such as based on maintenance schedule generation software executed on an IT asset (e.g., computing device) associated with the industrial automation system 10.

At block 324, the cloud-computing system 108 may identify one or more parts associated with the maintenance schedule. To identify the parts, the cloud-computing system 108 may read indications of parts included with stored indications of work orders associated with the maintenance schedule. For example, the indications of work orders may include indications of parts to be used to perform the associated maintenance activity. In some systems, the cloud-computing system 108 may identify the parts based on an indication of parts received via an input device.

At block 326, the cloud-computing system 108 may access data in storage to determine whether the one or more parts are already located in physical inventory on-site. To do so, the cloud-computing system 108 may generate a query that includes an indication of a part and an indication of the industrial automation system to cause a comparison with a list of parts stored in physical inventory in the indicated industrial automation system. If the cloud-computing system 108 determines that the each of the one or more parts are already stored in the physical inventory on-site, the process 320 may stop there and the cloud-computing system 108 may update data associated with the maintenance schedule to indicate that each part for each associated work order are in physical inventory on-site and ready for use in the shutdown maintenance activities.

However, the cloud-computing system 108 may determine that one or more parts are stored elsewhere than in the physical inventory on-site. If so, at block 328, the cloud-computing system 108 may generate a work order to instruct delivery of the one or more parts. The work order may instruct delivery of a part off-site (e.g., not in the physical inventory) at another location to the physical inventory on-site. The off-site location may correspond to an enterprise-owned distribution or storage facility. The cloud-computing system 108 may access an indication of a threshold time corresponding to a desired early arrival of the part before the scheduled shutdown. The cloud-computing system 108 may generate the work order to instruct the delivery to occur the threshold time before the maintenance schedule.

At block 330, the cloud-computing system 108 may generate a work order to instruct delivery of a replacement part to be delivered a second threshold time before the maintenance schedule, such as from a manufacturer or distributor. The second work order generated may be to replace a replacement part stored on-site or in enterprise-associated physical inventory. The cloud-computing system 108 may read an indication of permission associated with the industrial automation system 10, where the permission may grant the cloud-computing system 108 authority to purchase the replacement part on behalf of the industrial automation system 10. Thus, the work order may include an indication of a purchase order for the replacement part. Some industrial automation systems 10 may not be associated with indications of permission. Thus, the cloud-computing system 108 may generate work orders with purchase orders on behalf of some industrial automation systems 10 and not others. Generating work orders, at blocks 328 and 330, may enable the cloud-computing system 108 to procure, on behalf of the industrial automation system 10, the parts to be used in completing the work order while also procuring on behalf of the enterprise the parts to be stored as replacement parts to replace the parts used in completing the work order. Less waste may be experienced enterprise-wide by the cloud-computing system 108 centralizing procurement instructions by enabling shipment and logistics to be handled at a level above a single industrial automation system 10.

The cloud-computing system 108 may perform these operations with the replacement part coordination operations described above to generate instructions to cause the shipment of the various replacement parts from various physical locations to the warehouse of the industrial automation system 10. This may include operating the associated assets in the increased lifespan mode while awaiting a planned shutdown. In some cases, the maintenance recommendations may be prioritized based on the criticality of the recommendation, an estimated time of completion, and the estimated shipping time for any parts to be used in the maintenance activity. This may help reduce unexpected delays that may otherwise occur when a maintenance activity is scheduled but a part is missing.

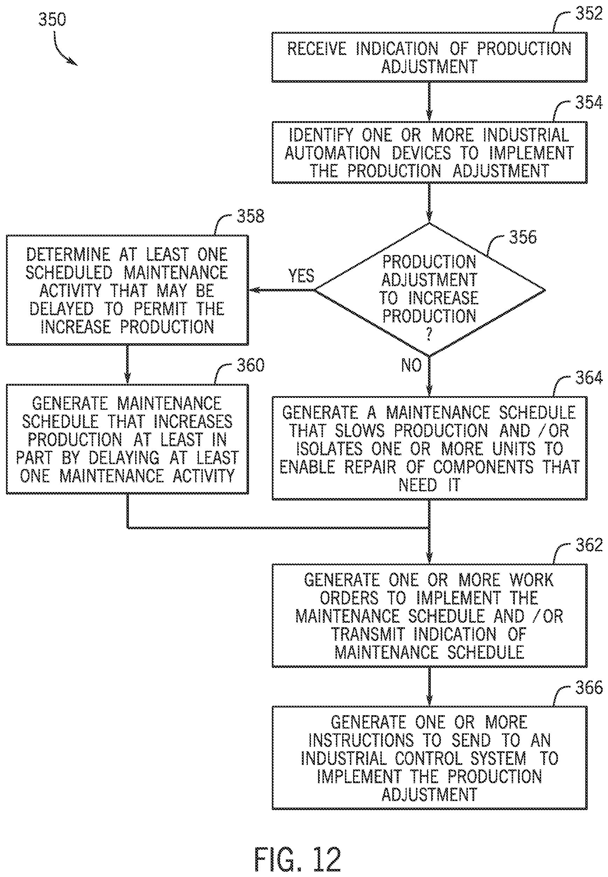

In some cases, the cloud-computing system 108 may help optimize production using similar operations. Given an indication with a trend of sales data, the cloud-computing system 108 may autonomously turn the trend in sales data into production adjustments. For example, if the trend in sales data indicates a reduction in sales, then the cloud-computing system 108 may reduce production of the industrial automation system 10 to match a decrease in demand. Conversely, if the trend in sales data indicates an increase in sales, then the cloud-computing system 108 may increase production of the industrial automation system 10 to match the increase in demand. The cloud-computing system 108 may increase or decrease production based on generating instructions to be sent to the industrial control system 20 of the industrial automation system 10. The industrial control system may adjust operations of one or more assets to implement the desired increase or decrease in production instructed by the cloud-computing system 108. FIG. 12 illustrates a flowchart of operations that may be performed by the cloud-computing system 108 to adjust operations of the industrial automation system 10 based on production adjustment and/or to generate a recommendation to repair or replace a part or an asset based on a cost-analysis.

FIG. 12 is a flow chart of a process for implementing a desired production adjustment (e.g., increase output by 20%, decrease production volume to equal a volume sold from last quarter) based on determining whether operating a part according to a recommended operation may cause the desired production adjustment. Although the process 350 is described as being performed by the cloud-computing system 108, it should be understood that in some systems another suitable computing device may perform some or all of the operations of the process 350. The operations of the process 350 are shown in a specific order, and it should be understood that in some systems the operations may be performed with additional or alternative operations and in a same or different order. Indeed, sometimes one or more operations may be omitted in an actual implementation.

At block 352, the cloud-computing system 108 may receive an indication of a desired production adjustment. The cloud-computing system 108 may itself generate the indication of the production adjustment based on indications of sales information stored in one or more IT assets or other data which may communicate a desire to increase or decrease production. For example, the cloud-computing system 108 may have access to indications of sales information and determine based on indications that the last quarter sales for the industrial automation system 10 for the enterprise were lower than predicted. Based on this determination, the cloud-computing system 108 may determine to delay nonmandatory downtime scheduled to allow for overproduction in the next quarter. The cloud-computing system 108 may have access to sales information associated with the industrial automation system 10, associated with subsystems of the industrial automation system 10, associated with an associated enterprise, associated with multiple industrial automation systems 10, or the like. As such, the cloud-computing system 108 may determine adjustments to production at one or more industrial automation systems 10 of an enterprise based on the sales and production data of the enterprise. As another example, the cloud-computing system 108 may read sales and production data of the enterprise and determine that sales are below a threshold amount. Based on this determination, the cloud-computing system 108 may determine to shut down the subsystem within the industrial automation system 10 to slow production to equal past sales indicated within the sales and production data. Based on determining to shut down the subsystem, the cloud-computing system 108 may generate a maintenance schedule now for this quarter to identify and schedule component repairs to occur to maximize the shut down of the subsystem. By enabling the cloud-computing system 108 to perform these decisions, fewer computing resources may be consumed enterprise-wide to implement maintenance and shut down decisions. Furthermore, following these methods may enable more predictive maintenance to occur as opposed to reactive maintenance.

To elaborate, at block 354, the cloud-computing system 108 may identify one or more industrial automation devices to implement the production adjustment. Identifying the industrial automation devices associated with the production adjustment may be based stored indications of the industrial automation devices maintained by the industrial control system 20 and/or stored in storage 112.

The cloud-computing system 108, at block 356, may determine whether the indication of the production adjustment from block 352 instruction a production increase. In response an increase, at block 358, the cloud-computing system 108 may determine a scheduled maintenance activity that can be delayed to help increase production. The cloud-computing system 108 may determine this based on analyzing life stages of assets and parts and which is greater than a threshold life stage. Based on this, at block 360, the cloud-computing system 108 may generate a maintenance schedule that increases production at least in part by delaying that maintenance activity. More than one maintenance activity may be delayed to implement the production adjustment from the block 352.

However, if at block 356, the cloud-computing system 108 determines that the indication of the production adjustment from block 352 indicates to decrease production or keep production the same, at block 364, the cloud-computing system 108 may generate a maintenance schedule that slows or keeps production the same while instructing isolation of one or more units to enable repairs to occur. For example, the cloud-computing system 108 may determine which maintenance activities are to be scheduled to occur relative to one or more subsystems being shut down or slowed and select between combinations of maintenance activities and/or subsystems based on a life stage of assets and parts to be repaired or replaced and a combination of those that may yield, if shut down for repair or replacement, the desired maintenance outcome.

At block 362, the cloud-computing system 108 may generate one or more work orders to implement the maintenance schedule and/or transmit indication of the maintenance schedule generated at blocks 360 or 364. The indications of work orders generated at block 362 may implement the production adjustment at block 352 based on instructing the maintenance activities of block 364 and and/or block 368.

At block 366, the cloud-computing system 108 may generate one or more instructions to send to industrial control systems 20 to implement the production adjustment. This may involve generating an indication of one or more control instructions to send to an industrial control system 20 to implement the production adjustment, such as at one or more local control systems of one or more assets.

The industrial control system 20 may receive the instructions from the cloud-computing system 108 generated at block 366. The industrial control system 20 may coordinate the instructed production adjustment determined by the cloud-computing system 108 at least in part by generating one or more commands to be sent to one or more local control systems of assets, which may have been identified in the instruction from the cloud-computing system 108. In some systems, the industrial control system 20 may receive an indication of the maintenance schedule generated at blocks 360 or 364, may determine an indication of a current time, may compare the current time to an indication of a scheduled time of the maintenance schedule, and when equal, the industrial control system 20 may implement its portion of the maintenance schedule. For example, the industrial control system 20 may prompt the isolation of one or more industrial automation devices, may generate one or more notifications to be presented via HMI to instruct an operator through maintenance activity, or the like. Based on the instructions from the cloud-computing system 108, the industrial control system 20 may implement the production adjustment determined by the cloud-computing system 108.

In any of these examples, some of the information processed by the cloud-computing system 108 may be sent for presentation at user equipment via graphical user interfaces (GUIs). The cloud-computing system 108 may generate updates in data presented via the GUIs in response to inputs received via the user equipment. Examples of GUIs are shown in FIG. 13.

To elaborate, FIG. 13 is a diagrammatic representation of four example graphical user interfaces to convey image data generated based on one or more results from one or more processes of FIGS. 5-13. A first GUI 382, a second GUI 384, a third GUI 386, and a fourth GUI 388 may illustrate example visualizations that may be generated based on operations described relative to FIGS. 5-13. Each GUI 382-386 may include an indication of an asset (e.g., indication 390), which illustrates a serial number (e.g., "20G21ND....NNNN"), an asset type (e.g., "Conveyor C6 Head"), and a model number (e.g., "PowerFlex 755TS").

The first GUI 382 also includes a part life stage indication (e.g., indication 392). The part life stage indication may change in visualization as the life stage changes, such as change in color, size, pattern, flashing state, or any suitable indication. Indeed, indication 392b may correspond to a different life stage than indication 392 and thus use a different visualization. Some part life stage indications may also include a percentage indication, such as with indication 394, where the percentage indication may correspond to a percentage representative of the life stage of that part (e.g., 20% life stage for the "stirring fan" in this example). Indications of device data 396 may be stored by the cloud-computing system 108 and be used to generate the GUIs 382-386.

The second GUI 384 conveys an indication of "a time to next" maintenance operation or scheduled alert. Indeed, the cloud-computing system 108 may read an indication of work orders associated with the part or asset indicated (e.g., via the indication 390) and determine based on the read work orders which of the work orders is set to occur next or within a threshold time period. Based on that determination, the cloud-computing system 108 may generate an indication of the "time to next" maintenance operation (e.g., indication example of "time to next" "44 Days").

The third GUI 386 may include indications of example device vitals and an indication of an overall device state. The device state may correspond to a life stage of the asset indicated via the indication 390. In some cases, the life stage indicated as corresponding to the asset of the indication 390 may be based on one or more life stages of one or more parts of the asset.

The fourth GUI 388 may convey behavior analysis of the asset indicated via the indication 390. Information conveyed via GUIs, such as behavior analysis of the asset information, device vitals data, and/or life stage determinations, may be based on one or more comparisons performed by the cloud-computing system 108.

Indeed, when determining metrics for determining life stages, sensed data may be processed via an edge device disposed between the cloud-computing system 108 and the industrial automation system 10. An example of processing the sensed data is shown in FIG. 14.

To elaborate, FIG. 14 is a diagrammatic representation of an example of vitals data processing operations 420, which may be used to generate health indications corresponding to a life stage of an asset (e.g., OT device). the "signal threshold %" may be a threshold that corresponds to a percentage value of the "signal %" input deemed to indicate an "unhealthy" operation, or an undesired operation that differs from a normal operation. The data processing operations 420 are described herein relative to circuitry and it should be understood that in some systems the data processing operations 420 may be performed via one or more computing operations based on computing circuitry executing instructions stored in a computer-readable or machine-readable medium. The data processing operations 420 may determine several time-related metrics to determine an amount of time that the "Signal%" input is identified as being above the "Signal Threshold %." In some systems, data generated by processing the sensed data at the edge may be correlated to the life stages discussed above. For example, the determined amount of time (e.g., that the "Signal %" input is identified as being above the "Signal Threshold %") may be correlated to a life stage. The example of FIG. 14 is an example of processing that may be performed by an edge device when generating vitals data. Data processing at an edge device 110 may enable less data to be transmitted overall into the cloud-computing system 108 while maintaining monitoring capabilities and performance since, as an example, the original "Signal%" input may not be transmitted with the output values 428a, 428b, and 428c into the cloud-computing system 108 for further processing, storage, and reporting. Reducing data transmitted to the cloud-computing system 108 may improve operations by reducing an amount of storage and computing used to processing and handle incoming data from the industrial automation system 10, among other improvements.

To elaborate, an example processing operation is illustrated via FIG. 14. Other processing operations may be performed via different combinations of thresholds, thresholding circuits, percentage circuits, summation circuits, subtraction circuits (not illustrated), combinational circuits, or the like (e.g., any suitable computational circuitry may be used to generate an output). A signal (e.g., "Signal %") may be received at a thresholding circuit 442a and compared to a threshold (e.g., "Signal Threshold %"). A decision signal (e.g., "Above Threshold Yes" or "Above Threshold No") may be generated based on the comparison and the decision signal may be transmitted to summation circuits 424a-c. The summation circuit 424a may combine the decision signal with a time indication (e.g., "Motor Running Hour/Day/Week") of how long an asset has been running for in hours, days, weeks, and years. The summation circuit 424a may generate a time indication (e.g., in hours, days, and/or weeks) corresponding to an amount of time that an asset (e.g., "Motor") has been running in total above a signal threshold (e.g., "x"). Any suitable performance metric may be used as the signal threshold and may vary based on the asset being monitored. A percentage circuit 426 may receive the time indication output (e.g., "Motor Running (Time) Above Signal Threshold (x)") and may process it to generate an a percentage indication (e.g., percentage of total time relative to an indication of motor running time spend above the threshold, "Motor Running (Time) Above Signal Threshold %"). The percentage indication may be transmitted to a thresholding circuit 422b, which may compare the percentage output to an indication of a time threshold, such as a time in percentage units (e.g., "Time Threshold %"). The thresholding circuit 422b may generate an output value 428a to indicate an amount of time that the asset has spent operating above threshold per unit of percentage of time (e.g., "Event Motor Running Above % Signal Per % Time"). For example, the output value 428a may indicate that an asset has been operating above 95% threshold for 90% of time within the past 24 hours (e.g., hour time window).

Operations of summation circuit 424b, percentage circuit 426b, and thresholding circuit 422c may be similar to that of summation circuit 424a, percentage circuit 426a, and thresholding circuit 422b. Operations of summation circuit 424b, percentage circuit 426b, and thresholding circuit 422c may use different time threshold values as "Time Threshold %." The time indication (e.g., "Motor Running Hour/Day/Week") received at summation circuit 424b and percentage circuit 426b may be the same as the time indication received at summation circuit 424a and percentage circuit 426a since the data processing operation 420 are performed as part of an overall monitoring of an asset. Thus, the time that the asset has been running for in hours, days, weeks, and/or years may be the same for the different operations of the data processing operation 420. In cases where the time thresholds are different, the output value 428a and the output value 428b may be different.

Furthermore, operations of summation circuit 424c and thresholding circuit 422d may be similar to that of summation circuit 424a and thresholding circuit 422b while being based on different inputs, thereby generating a different vital data output (e.g., output value 428c). The output value 428c may indicate an amount of time that the asset has spent operating above threshold the threshold (e.g., "Signal Threshold %" received at threshold circuit 422a) per unit of percentage of time (e.g., "Event Motor Running Above Threshold Per X Minutes"). For example, the output value 428a may indicate that an asset has been operating above 90% threshold for 10 minutes (e.g., over a time window of the time threshold received at 422d).

It is noted that the cloud-computing system 108 may detect advanced or increasing degradation relative to an amount of degradation indicated as expected by the data model 116, such as with operations of block 164 of FIG. 5, block 246 of FIG. 8, or the like. In these cases, the cloud-computing system 108 may generate an operational adjustment to the asset that, when implemented by the industrial control system 20, may slow degradation and/or enable the cloud-computing system 108 to debug operation. During a debug operation, the cloud-computing system 108 may identify a root-cause for the advanced or increasing degradation, which may be used when instructing an adjustment or repair. The root-cause may correspond to an expected computational root cause of the degradation, an expected mechanical root cause of the degradation, or both, or the like. A computational root cause may be a set point of the asset, a combination of set points of one or more assets or parts associated with causing an operation leading to the degradation, or the like. A mechanical root cause may be one or more parts and/or one or more assets mis-operating to cause the degradation or the like.

In some cases, operations of process 210 of FIG. 7 may involve the cloud-computing system 108 performing plant-level supervisory control to enable demand forecasting of parts or assets. Based on the dynamic nature of shipment and fulfilment times, the cloud-computing system 108 may monitor trends in shipment and fulfilment times and trigger replacement work orders to ship replacement parts and/or replacement assets within desired threshold of life remaining of the part or asset to arrive before crossing a desired threshold of time before the replacement is to occur and/or an end-of-life condition is expected to occur.

In some cases, the cloud-computing system 108 may generate an indication of degradation and/or life stage relative to a temperature of a physical location. For example, for an asset being operated with relatively high amounts of strain, the cloud-computing system 108 may generate an indication of degradation that conveys "this asset is running as if it is installed in the Sahara desert." The industrial control system 20 may receive the indication of degradation or life stage from the cloud-computing system 108 and update a GUI or HMI to present an alert or an indication of the information conveyed by the indication of degradation or life stage.

Systems and methods described herein may enable a cloud-computing system to analyze sensed data based on a part-specific data model. The cloud-computing system may be relatively more capable of performing relatively high complexity predictive analysis operations than other control circuitry of the industrial automation system (e.g., industrial control system 20, which may enable predictive maintenance trending to occur across longer time periods, relative to more complex modeling, and/or relative to a multitude of assets and/or parts. The cloud-computing system may instruct the industrial control system to implement recommended adjustments and/or to confirm a part replacement occurred in situ. By confirming the part replacement in situ, less downtime may be realized based on the validation operations being based on comparing sensed data to expected sensed data, which may lead to higher production levels and more efficient output of the industrial automation system. By enabling the cloud-computing system to communicate with IT assets and/or OT assets, such as the industrial control system, monitoring capabilities of the industrial control system may increase, permitting more efficient control of the industrial automation system that may, over time, reduce power consumed, reduce carbon footprint of operations, and/or improve efficiency of computing operations, enabling fewer computing resources to be consumed when performing operational maintenance. Data processing to generate vitals data may enable less data to be transmitted overall into the cloud-computing system while maintaining monitoring capabilities and performance since. Reducing data transmitted to the cloud-computing system may improve operations by reducing an amount of storage and computing used to processing and handle incoming data from the industrial automation system, among other improvements.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A system comprising:
a first computing system configured to:
receive an identity indication from an edge device configured to communicatively couple to an industrial automation system, wherein the identity indication is associated with an industrial automation device, wherein the identity indication comprises a catalog number of the industrial automation device, a revision indication of the industrial automation device, a serial number of the industrial automation device, a product name of the industrial automation device, or any combination thereof;
identify a part of the industrial automation device based on selecting a part list from a plurality of indications of part lists stored on a storage device based on the identity indication, wherein the part list is associated in the storage device with at least one of the catalog number of the industrial automation device, the revision indication of the industrial automation device, the serial number of the industrial automation device, the product name of the industrial automation device, or any combination thereof; and
receive an indication of sensed data acquired at a first time in association with the part of the industrial automation device;
receive a device model corresponding to the part, wherein the device model comprises a plurality of indications of sensed data expected to be received while the part is operated at each life stage of a plurality of life stages;
identify a life stage of the part from the plurality of life stages based on comparing the sensed data to the plurality of indications of sensed data;
determine to replace the part based on comparing the life stage to a threshold life stage; and
transmit an indication of a recommendation to replace the part and the life stage to a second computing system on-premise relative to the industrial automation system.

2. The system of claim 1, wherein the first computing system is configured to:
generate the indication of the recommendation to replace the part and an indication of a scheduled time;
determine that the scheduled time is a threshold amount of time after a current time;
determine a first adjustment to an operation of the part based on a life extension mode based determining that the scheduled time is the threshold amount of time after the current time; and
transmit an instruction of the first adjustment to an industrial control system of the industrial automation system via the edge device.

3. The system of claim 2, at least one of:
wherein the first computing system is configured to:
determine that the part has been replaced by a replacement part based on comparing sensed data received after the scheduled time corresponding to expected sensed data indicated by the device model;
determine a second adjustment to the operation of the part to exit the life extension mode based on determining that the part has been replaced by the replacement part; and
transmit an instruction of the second adjustment to an industrial control system of the industrial automation system via the edge device; and
wherein the first computing system is configured to determine the first adjustment to the operation of the part based on a life extension mode at least in part by:
receiving an indication of desired production adjustment; and
determining that operating the part based on the life extension mode causes the desired production adjustment.

4. The system of one of claims 1 to 3, wherein the edge device is configured to communicatively couple to the industrial automation system via a physical coupling to an industrial control system disposed on-premise relative to the industrial automation system, and wherein the industrial automation device sends the identity indication to the edge device in response to being powered on in the industrial automation system for a first time.

5. The system of claim 4, wherein the identity indication comprises a vendor identification of the industrial automation device of the industrial automation system, a device type of the industrial automation device, a product code of the industrial automation device, or any combination thereof.

6. The system of one of claims 1 to 5, at least one of:
wherein the first computing system is configured to select the part list from the plurality of indications of part lists at least in part by:
generating a classification weight data based on the identity indication; and
selecting the part list based on the classification weight data relative to a part list prediction indicated via the classification weight data;
wherein the sensed data comprises data acquired through one or more virtual sensors, data represented in symbolic data structures, or both; and
wherein the first computing system is disposed off-premise relative to the industrial automation system.

7. A system comprising:
a computing system configured to:
receive an identity indication from an edge device configured to communicatively couple to an industrial automation system, wherein the identity indication is associated with an industrial automation device, wherein the identity indication comprises a catalog number of the industrial automation device, a revision indication of the industrial automation device, a serial number of the industrial automation device, or a product name of the industrial automation device, or any combination thereof;
receive an indication of sensed data acquired at a first time in association with a plurality of parts of the industrial automation device;
identify a part of the plurality of parts based on a plurality of indications of part lists stored on a storage device, the identity indication, and the sensed data;
receive a device model corresponding to the part, wherein the device model comprises a plurality of indications of sensed data expected to be received while the part is operated at each life stage of a plurality of life stages;
identify a life stage of the part from the plurality of life stages based on comparing the sensed data to the plurality of indications of sensed data; and
generate a recommendation to replace the part based on the life stage.

8. The system of claim 7, wherein the computing system is configured to transmit an indication of the recommendation and the life stage to an industrial control system of the industrial automation system.

9. The system of claim 7 or 8, wherein the computing system is configured to transmit an indication of the recommendation and the life stage to an additional computing system disposed on-premise relative to the industrial automation system and outside a computing domain associated with the computing system, and wherein the computing system is disposed off-premise relative to the industrial automation system.

10. The system of claim 9, wherein the additional computing system is configured to transmit an indication of the life stage as part of a graphical user interface to one or more user equipment.

11. The system of one of claims 7 to 10, at least one of:
wherein the computing system is configured to transmit an indication of the recommendation and indication of the life stage as part of a graphical user interface to one or more user equipment; and
wherein the computing system is configured to transmit an indication of the recommendation as part of a work order indication.

12. A tangible, non-transitory, computer-readable medium storing instructions that, when executed by processing circuitry, cause a computing system to perform operations comprising:
receiving an identity indication from an edge device configured to communicatively couple to an industrial automation system, wherein the identity indication is associated with an industrial automation device, wherein the identity indication comprises a catalog number of the industrial automation device, a revision indication of the industrial automation device, a serial number of the industrial automation device, or a product name of the industrial automation device, or any combination thereof;
receiving an indication of sensed data acquired at a first time in association with a plurality of parts of the industrial automation device;
identifying a part of the plurality of parts based on a plurality of indications of part lists, the identity indication, and the sensed data;
receiving a device model corresponding to the part, wherein the device model comprises a plurality of indications of sensed data expected to be received while the part is operated at each life stage of a plurality of life stages;
identifying a life stage of the part from the plurality of life stages based on comparing the sensed data to the plurality of indications of sensed data; and
generating an indication of a recommended operation to perform relative to the part based on the life stage.

13. The tangible, non-transitory, computer-readable medium of claim 12, at least one of:
wherein generating the indication of the recommended operation to perform relative to the part based on the life stage comprises generating an indication of:
a part repair instruction;
a part replacement instruction;
a part operational adjustment; or
any combination thereof; and
wherein generating the indication of the recommended operation at least in part by:
receiving an indication of desired production adjustment; and
determining that operating the part according to a recommended operation causes the desired production adjustment.

14. The tangible, non-transitory, computer-readable medium of claim 12 or 13, wherein generating the indication of the recommended operation to perform relative to the part based on the life stage comprises:
generating an indication of a replacement instruction comprising an indication of a scheduled time;
determining that the scheduled time is a threshold amount of time after a current time;
determining a first adjustment to an operation of the part based on a life extension mode based determining that the scheduled time is the threshold amount of time after the current time; and
transmitting an instruction of the first adjustment to the part to an industrial control system of the industrial automation system via the edge device.

15. The tangible, non-transitory, computer-readable medium of claim 14, wherein generating the indication of the recommended operation to perform relative to the part based on the life stage comprises:
receiving an indication that a replacement part corresponding to the part arrived at the industrial automation system;
determining that the part has been replaced by the replacement part based on sensed data received after the scheduled time;
determining a second adjustment to the operation of the part to exit the life extension mode based on determining that the part has been replaced by the replacement part; and
transmitting an instruction of the second adjustment to the part to an industrial control system of the industrial automation system via the edge device.
